# EUROPÄISCHE PATENTSCHRIFT

(11) **EP 0 941 177 B1**
(45) Veröffentlichungstag und Bekanntmachung des Hinweises auf die Patenterteilung: **23.04.2003**
(21) Anmeldenummer: 97953615.8
(22) Anmeldetag: 04.12.1997
(51) Int. Cl.: B60R 21/08, B60R 5/04

(54) **SICHERHEITSNETZANORDNUNG MIT VEREINFACHTER BEDIENUNG**
EASY-TO-USE SAFETY NET DEVICE
ENSEMBLE FILET DE SECURITE A MANIPULATION SIMPLIFIEE

(30) Priorität: 06.12.1996 DE 19650768; 10.03.1997 DE 19709525
(43) Veröffentlichungstag der Anmeldung: 15.09.1999
(73) Patentinhaber: BOS GmbH & Co. KG, 73760 Ostfildern (DE)
(72) Erfinder: AMENT, Eduard, D-73773 Aichwald (DE); SEEL, Holger, D-71134 Aidlingen (DE); WALTER, Herbert, D-73061 Ebersbach (DE)
(74) Vertreter: Patentanwälte Rüger, Barthelt & Abel
(86) Internationale Anmeldenummer: DE9702838
(87) Internationale Veröffentlichungsnummer: WO98024660

(56) Entgegenhaltungen:
- EP-A- 0 649 778
- DE-A- 2 749 560

## Beschreibung

Sicherheitsnetzanordnungen dienen dazu, bei Kombi-PKW oder ähnlichen Fahrzeugen den Lade- oder Gepäckraum gegenüber dem Fahrgastraum mechanisch abzuschotten. Sie sollen verhindern, dass bei einem Auffahrunfall oder Crash Gegenstände aus dem Laderaum in den Fahrgastraum geschleudert werden und dort die Insassen verletzen oder töten. Zu diesem Zweck wird die z.B. über der Kante der Rücksitzlehne verbleibende Öffnung unterhalb des Dachhimmels mit dem Sicherheitsnetz verschlossen, wenn eine solche Gefährdung potenziell besteht.

Kann hingegen eine Gefährdung der Insassen mit Sicherheit ausgeschlossen werden, weil die Ladehöhe im Kofferraum die Höhe der Rücksitzkante nicht übersteigt und auch bei einem Auffahrunfall zusammenrutschende Gegenstände sich nicht so anhäufen können, bis sie die Rücksitzlehne überklettern können, braucht das Sicherheitsnetz nicht verwendet zu werden. Im Gegenteil, es ist dann eher störend.

Aus diesem Grund wird das Sicherheitsnetz häufig nach Art eines Springrollos gestaltet.

Die EP-A-0 649 778 zeigt eine derartige Sicherheitsnetzanordnung. Die bekannte Sicherheitsnetzanordnung weist ein Gehäuse auf, in dem drehbar eine Wickelwelle gelagert ist. An der Wickelwelle ist mit einer Kante ein Sicherheitsnetz befestigt, dessen andere Kante mit einer Zugstange versehen ist. Die Zugstange trägt Verankerungsglieder, die in entsprechende Aufnahmetaschen in der Karosserie eingehängt werden können.

Der Federmotor, der die Wickelwelle im Aufwickelsinne vorspannt, ist verhältnismäßig kräftig, um das Sicherheitsnetz im ausgefahrenen Zustand hinreichend straff gespannt zu halten. Der Federmotor ist jedoch nicht so stark, als dass er die Gegenstände aufhalten könnte, die bei einem Crash oder einem starken Bremsvorgang gegen das Sicherheitsnetz geschleudert werden.

Um bei der bekannten Anordnung das Sicherheitsnetz aufspannen zu können, muss es an der Zugstange zunächst gegen die Wirkung der Wickelfeder hinreichend weit aus dem Gehäuse herausgezogen werden. Erst dann können die Verankerungsglieder in die Aufnahmetaschen eingehängt werden.

Wegen der Stärke des Federmotors ist hierzu eine beträchtliche Kraft erforderlich und obendrein sind die Aufnahmetaschen zufolge der Fahrzeuggeometrie von einer Bedienperson, die vor der Laderaumöffnung des Fahrzeugs steht, nur schwer erkennbar. Für die Bedienperson ist es deswegen nicht einfach, die Verankerungsglieder in die Aufnahmetaschen einzuhängen, insbesondere wenn die bei diesem Vorgang erforderliche, etwas ungünstige Körperhaltung mit ausgestreckten Armen bedacht wird.

Ausgehend hiervon ist es Aufgabe der Erfindung, eine Sicherheitsnetzanordnung zu schaffen, die beim Einhängen in die karosserieseitigen Aufnahmetaschen leichter handhabbar ist.

Diese Aufgabe wird erfindungsgemäß durch die Sicherheitsnetzanordnung mit den Merkmalen des Anspruches 1 gelöst.

Die Halteeinrichtung sorgt dafür, dass zumindest ein Teil der Rückzugskraft aufgenommen wird, die durch die Antriebseinrichtung für die Wickelwelle bzw. deren Federmotor entsteht. Der Benutzer muss damit an der Zugstange nur noch eine kleinere Kraft aufbringen. Diese kleinere Kraft kann auch ohne weiteres mit ausgestreckten Armen erbracht werden.

Außerdem hat die Halteeinrichtung den großen Vorteil, dass sie dem Benutzer signalisiert, wann die ausreichende Menge an Sicherheitsnetz abgewickelt ist, damit die Zugstange in die karosserieseitigen Aufnahmetaschen eingefädelt werden kann. Dies ist insbesondere bei Sicherheitsnetzen von Bedeutung, die variabel einzusetzen sind, in dem Sinne, dass das Gehäuse sich in der einen Gebrauchsstellung auf der Höhe der Oberkante der Rücksitzlehne befindet. In der anderen Gebrauchsstellung befindet sich das Gehäuse in der Nähe des Bodens des Laderaums, womit auf der Wickelwelle ein entsprechender Vorrat an Sicherheitsnetz aufgewickelt sein muss. Die Halteeinrichtung vereinfacht es dem Benutzer, die entsprechende Zwischenstellung zu finden.

Dementsprechend legt wenigstens eine Auszugsposition eine Teilauszugslänge fest, in der das Sicherheitsnetz lediglich ein Stück seiner gesamten möglichen Auszugslänge ausgezogen ist. Falls das Sicherheitsnetz lediglich für eine Auszugslänge konstruiert ist, ist es auch möglich, die Auszugsposition so festzulegen, dass sie nahezu der gesamten möglichen Auszugslänge entspricht.

Besonders günstig wird die Handhabung, wenn die Halteeinrichtung derart gestaltet ist, dass sie die Rückzugskraft vollständig aufnimmt. Eine solche Halteeinrichtung ist vorzugsweise mit zwei Zuständen versehen, nämlich einem ersten, in dem sie Rückzugskraft übernimmt, und einem zweiten, in dem sie die Rückzugskraft nicht übernimmt, damit das Sicherheitshetz wieder auf die Wickelwelle aufgewickelt werden kann.

Im Falle einer vollständigen Übernahme der Rückzugskraft durch die Halteeinrichtung ist der Halteeinrichtung eine Auslöseeinrichtung zugeordnet, die dazu eingerichtet ist, die Halteeinrichtung aus dem ersten in den zweiten Zustand zu überführen.

Diese Auslöseeinrichtung kann durch ein Zeitglied gebildet sein, so dass eine manuelle Betätigung entbehrlich ist. Sie kann aber auch zur manuellen Betätigung vorgesehen sein. Diese Ausführungsform ist konstruktiv die einfachste, setzt aber ein Mitwirken des Benutzers voraus.

Die Halteeinrichtung kann auch so gestaltet sein, dass sie dem Benutzer zumindest signalisiert, dass das Sicherheitsnetz zum Einhängen des Zugstabs ausreichend weit ausgezogen ist.

Zur Ausführung der Halteeinrichtung kommen drei unterschiedliche Grundformen in Betracht. In der einen Grundausführung arbeitet die Halteeinrichtung mit dem Zugstab zusammen, in der zweiten Ausführungsform mit der Wickelwelle und in einer dritten Ausführungsform kann sie mit einem Stab zusammenwirken, der an dem Sicherheitsnetz befestigt ist.

Gleichgültig wie die Halteeinrichtung im Einzelnen gestaltet ist, kann sie kraftschlüssig zusammenwirkende, überwindbare Rastmittel aufweisen, die derart gestaltet sind, dass sie ein weiteres Ausziehen des Sicherheitsnetzes über diejenige Auszugslänge, bei der das Sicherheitsnetz zum Einhängen des Zugstabs in die Aufnahmetaschen ausreichend weit ausgezogen ist, nicht verhindern. Diese Rastmittel übernehmen ebenfalls ohne weiteres einen Teil der Rückzugskraft und erleichtern damit die Handhabung beim Einhängen des Zugstabs.

Die Halteeinrichtung kann auch formschlüssig zusammenwirkende Fangmittel aufweisen, die derart gestaltet sind, dass sie ein weiteres Ausziehen des Sicherheitsnetzes über diejenige Auszugslänge, bei der das Sicherheitsnetz zum Einhängen des Zugstabs in die Aufnahmetaschen ausreichend weit ausgezogen ist, sperren.

Kraftschlüssig zusammenwirkende überwindbare Rastmittel können z.B. in einer mit dem Gehäuse verbundenen Nut bestehen, die endseitig offen ist und in der ein an dem Netz angebrachter Zugstab verrastbar ist.

Um die oben erwähnte Halteeinrichtung, die mit der Wickelwelle zusammenwirkt, zu realisieren, kann als stationäres Haltemittel ein schwenkbares Verriegelungsglied verwendet werden. Dieses Verriegelungsglied ist in dem Gehäuse neben der Wickelwelle gelagert und trägt einen Mitnehmer, der mit der an dem Sicherheitsnetz befestigten Stange zusammenwirkt. Das Verriegelungsglied weist zwei Betriebsstellungen auf, wobei es in der einen Stellung ein Rücklaufen des Sicherheitsnetzes blockiert, während in der anderen Stellung die Stange frei passieren kann.

Eine solche Einrichtung ist sowohl von Hand als auch automatisch zurückzusetzen, und zwar z.B. mit einem Zeitglied. Dieses Zeitglied besteht im einfachsten Falle aus einer Viskositätsbremse. Damit das Zeitglied nicht wirksam ist, wenn das Verriegelungsglied in die Verriegelungsstellung gebracht wird, ist es über einen Freilauf mit der Viskosebremse gekuppelt. Die Viskosebremse lässt das Verriegelungsglied unter Krafteinwirkung nur vergleichsweise langsam in die Freigabestellung zurückgleiten, so dass während der gesamten Verzögerungszeit die Rückzugskraft von der Viskosebremse aufgenommen wird.

Im Falle der mit dem Zugstab zusammenwirkenden Halteeinrichtung ist im einfachsten Falle wenigstens ein Distanzelement vorgesehen, das einenends an dem Gehäuse befestigt und anderenends mit dem Zugstab verbunden ist. Dabei werden die mechanischen Verhältnisse sehr einfach, wenn das Distanzelement eine fixe unveränderliche Länge hat.

Um die gewünschte komfortable Handhabung zu erhalten, ist das Distanzelement derart mit dem Gehäuse verbunden, dass es ein Wegbewegen des Zugstabs von dem Gehäuse in Richtung auf die Laderaumöffnung ebensowenig behindert wie das Einhängen des Zugstabs in die Aufnahmetaschen. Dies wird erreicht, wenn das Distanzelement an dem Gehäuse mit einer Gelenkeinrichtung, die zwei rechtwinklig zueinander verlaufende Achsen aufweist, angelenkt ist.

Der Zugstab kann mit einer Schiebeführung für das vom Gehäuse abliegende Ende des Distanzelementes versehen sein.

Eine an dem Zugstab vorgesehene Rasteinrichtung gestattet, dass in einem Zustand das betreffende Ende des Distanzelementes frei passieren kann, wohingegen in der anderen Betriebsstellung das Distanzelement lediglich in einer Richtung durchgleiten kann. Hierdurch entsteht eine Abstützwirkung, die zwischen dem Gehäuse und dem Zugstab wirksam ist, da das Verschwenken des Distanzelementes von der Rasteinrichtung verhindert ist.

Im Übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 eine Sicherheitsnetzanordnung gemäß der Erfindung, wie sie an der Rückseite einer Rücksitzlehne befestigt ist, mit ausgezogenem Sicherheitsnetz zum Einhängen unter dem Dachhimmel, in einer perspektivischen Darstellung,
Fig. 2 die Sicherheitsnetzanordnung nach Fig. 1 in der eingehängten Stellung, ebenfalls in einer perspektivischen Darstellung,
Fig. 3 ein anderes Ausführungsbeispiel für eine Sicherheitsnetzanordnung, wie sie an der Rückseite einer Rücksitzlehne befestigt ist, mit in Richtung auf die Laderaumöffnung teilweise ausgezogenem Sicherheitsnetz in einer perspektivischen Darstellung,
Fig. 4 die Einzelheit bei A aus Figur 3 in einer vergrößerten perspektivischen Darstellung,
Fig. 5 und 6 die Fangmittel an einer Seite des Sicherheitsnetzes nach Figur 3 in einer vergrößerten schematischen Darstellung in unterschiedlichen Stellungen,
Fig. 7 und 8 eine Halteeinrichtung in Form von Rastmitteln für die Sicherheitsnetzanordnung nach Fig. 3 in unterschiedlichen Stellungen und in einer perspektivischen Darstellung,
Fig. 9 ein Ausführungsbeispiel einer Halteeinrichtung mit Zeitglied, in einer perspektivisch aufgebrochenen Darstellung,
Fig. 10 die Anordnung nach Fig. 8 in einer ähnlichen Darstellung, jedoch einer anderen Betriebsstellung,
Fig. 11 das Gehäuse der Sicherheitsnetzanordnung nach Fig. 9, in einem Querschnitt, dargestellt in der Ruhestellung,
Fig. 12 die Anordnung nach Fig. 11 in der Verriegelungsstellung,
Fig. 13 das Verriegelungsmittel und das Zeitglied, in einer perspektivischen Darstellung,
Fig. 14 eine Sicherheitsnetzanordnung, bei der die Halteeinrichtung mit der Wickelwelle zusammenwirkt, in einer perspektivischen Darstellung, unter Weglassung des Gehäuses,
Fig. 15 das mit der Wickelwelle verbundene Folgeglied, in einer perspektivischen Explosionsdarstellung,
Fig. 16 das mit dem Folgeglied versehene Ende der Wickelwelle zusammen mit der Spiralnut, in einem schematischen Längsschnitt,
Fig. 17 die Halteeinrichtung des Ausführungsbeispiels nach Fig. 14, in der Halteposition und in einem Schnitt rechtwinklig zu der Achse der Wickelwelle, und
Fig. 18 die Anordnung nach Fig. 17, in einer anderen Betriebsstellung und
Fig. 19 bis Fig. 23 eine Halteeinrichtung in Kombination mit einer beschleunigungsabhängigen Auslöseeinrichtung.

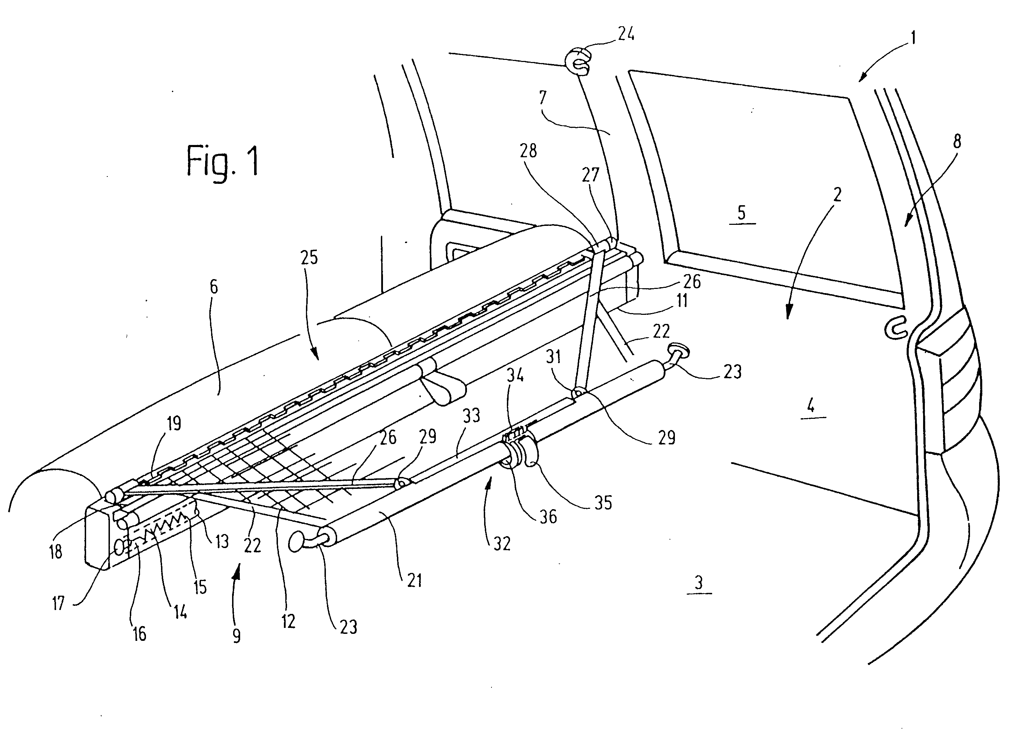

In Fig. 1 ist die aufgebrochen dargestellte Heckpartie 1 eines Kombiwagens oder Personenkraftwagens perspektivisch veranschaulicht, dessen Laderaum 2 von einem Boden 3 sowie zwei Seitenwänden begrenzt ist, von denen nur die rechte Seitenwand 4 zu sehen ist. Über der Seitenwand 4 befindet sich ein hinteres Seitenfenster 5, während den vorderen Abschluss des Laderaums 2 eine Rücksitzlehne 6 einer Rücksitzbank bildet. Das Seitenfenster 5 endet vorne an einer C-Säule 7, die sich etwa auf der Höhe der Rücksitzlehne 6 befindet und am hinteren Ende im Bereich einer Laderaumöffnung 8, von der nur ein seitlicher Rand zu sehen ist.

Wie die Figur erkennen lässt, gibt es zwischen dem Dachhimmel, der in der Figur nicht erkennbar ist, und der Oberkante der Rücksitzlehne 6 eine freie Öffnung, über die der Laderaum 2 mit dem Fahrgastraum verbunden ist, der sich vor der Rücksitzlehne 6 befindet. Damit bei einem Auffahrunfall keine Gegenstände aus dem Laderaum 2 in den Fahrgastraum geschleudert werden, ist eine Sicherheitsnetzanordnung 9 vorgesehen. Diese Sicherheitsnetzanordnung 9 weist ein Gehäuse 11 sowie ein aus dem Gehäuse 11 herauszuziehendes Sicherheitsnetz 12 auf.

Das Gehäuse 11 ist ein längliches Gehäuse, das lösbar an der Rückseite der Rücksitzlehne 6 befestigt ist und sich nahezu über deren gesamte Breite erstreckt. Im Inneren des Gehäuses 11 befindet sich eine Wickelwelle 13, die endseitig in dem Gehäuse 11 drehbar gelagert ist. Die Länge der Wickelwelle 13 entspricht etwa der Länge des Gehäuses 11.

Die Wickelwelle 13 ist zumindest in einem Endabschnitt rohrförmig und enthält in diesem Abschnitt eine Schraubenfeder 14, die als Federmotor dient. Die Schraubenfeder 14 ist mit ihrem innenliegenden Ende 15 starr mit der Wickelwelle 13 verbunden, während ihr außenliegendes Ende 16 starr und unverdrehbar mit einem gehäusefesten Lagerzapfen 17 für die Wickelwelle 13 verbunden ist.

An der Wickelwelle 13 ist mit einer Querkante das Sicherheitsnetz 12 befestigt, das durch einen Auslaufschlitz 18 aus dem Gehäuse 11 herausführt, der von zwei zueinander parallelen Lippen 19, 20 begrenzt ist. Eine Lippe des Auslaufschlitzes 18, nämlich die Lippe 19, ist gezahnt, um in der später beschriebenen Weise das Sicherheitsnetz 12 bei einem Crash zu fangen. Die Lippe 19 ist dem Fahrgastraum benachbart.

Das Sicherheitsnetz 12 weist eine von der Wickelwelle 13 abliegende Kante auf, die an einer Zugstange 21 befestigt ist. Seitliche Kanten des Sicherheitsnetzes 12 sind mit Bändern 22 eingefasst.

Die Zugstange 21 ist ein Profilrohr mit einer Kedernut zum Fixieren der betreffenden Kante des Sicherheitsnetzes 12. In ihren Enden enthält die Zugstange 21 pilzförmige Verankerungsglieder 23, die zum Einhängen in karosserieseitige Aufnahmetaschen 24 vorgesehen sind.

Der Federmotor 14 ist bestrebt, mit einer verhältnismäßig großen Kraft das Sicherheitsnetz 12 in das Gehäuse 11 hineinzuziehen. Die Kraft ist so groß, dass das Einhängen der Verankerungsglieder 23 durchaus schwierig sein kann. Um während des Einhängens der Verankerungsglieder 23 das Zurücklaufen des Sicherheitsnetzes 12 in das Gehäuse 11 zu verhindern, ist eine Halteeinrichtung 25 vorgesehen.

Die Halteeinrichtung 25 umfasst zwei Streben 26, von denen jede an einem Ende des Gehäuses 11 anscharniert ist. Nachfolgend wird die genaue Beschreibung für eine der beiden Streben 26 gegeben. Diese Beschreibung gilt sinngemäß und räumlich spiegelbildlich auch für die jeweils andere der beiden Streben 26.

Zur Befestigung der rechten Strebe 26 an der rechten Seite des Gehäuses 11 ist auf dessen Oberseite ein Lagerbock 27 befestigt. Der Lagerbock 27 steht neben dem Auslaufschlitz 18 auf der Seite der gezahnten Lippe 19. In ihm ist um eine Achse schwenkbar ein Scharnierkloben 28 gelagert ist. Die Schwenkachse des Scharnierklobens 28 liegt parallel zu der Längsachse der Wickelwelle 13. An dem Scharnierkloben 28 ist das gehäuseseitige Ende der Strebe 26 angelenkt, und zwar ist die Strebe 26 in dem Scharnierkloben 28 um eine Achse drehbar, die rechtwinklig zu der Achse verläuft, um die der Scharnierkloben 28 seinerseits zu drehen ist.

Das von dem Gehäuse 11 abliegende Ende der Strebe 26 ist schwenkbar mit einem Schlitten 29 verbunden, der in einer nicht erkennbaren Führungsnut in dem Zugstab 21 gleitend geführt ist. Die Verbindung zwischen der Strebe 26 und dem Schlitten 29 geschieht beispielsweise über einen locker sitzenden Niet 31, der die gewünschte Scharnierbewegung der Strebe 26 zulässt.

Die Führungsnut, die den Schlitten 29 aufnimmt, erstreckt sich über die gesamte Länge des Zugstabs 21.

An dem Zugstab 21 ist eine Rasteinrichtung 32 vorgesehen, die eine Abdeckklappe 33 umfasst. Diese Abdeckklappe 33 ist dazu vorgesehen, die Nut, in der die beiden Schlitten 29 laufen, abzudecken und sie ist an einem Scharnier 34 beweglich mit der Zugstange 21 verbunden. Mittels einer nicht erkennbaren Feder wird die Abdeckklappe 33 in eine Stellung vorgespannt, in der sie in den Bewegungsweg der beiden Schlitten 29 in der Führungsnut ragt. Um die Klappe 33 aus dieser Position herauszuheben, ist eine Betätigungslasche 35 vorhanden, die starr mit der Klappe 33 verbunden ist. Zwischen der Betätigungslasche 35 und der Zugstange 21 befindet sich eine Grifföse 36, die an der Zugstange 21 befestigt ist.

Die Handhabung der gezeigten Sicherheitsnetzanordnung 9 ist wie folgt, wobei angenommen wird, dass sich das Sicherheitsnetz 12 zunächst in der aufgewickelten Stellung im Gehäuse 11 befindet.

In dieser Stellung liegen die beiden Streben 26 parallel zu dem Zugstab 21 und ihre Schlitten 29 stehen einander in einem kurzen Abstand gegenüber. Die Abdeckklappe 33 ist angehoben und liegt auf denjenigen Teilen der Schlitten 29 auf, die aus der zugehörigen Führungsnut herausragen.

Die Kraft des Federmotors 14 lässt die Zugstange 21 an dem Auslaufschlitz 18 stramm anliegen.

Wenn der Benutzer das Sicherheitsnetz 12 aufspannen will, erfasst er von der Laderaumöffnung 8 her den Zugstab 21 an der Grifföse 36 und zieht die Zugstange 21 auf sich in Richtung auf die Ladeöffnung 8 zu. Bei dieser Bewegung wird gegen die Wirkung des Federmotors 14 das Sicherheitsnetz 12 über die glatte Lippe 20 des Auslaufschlitzes 18 herausgezogen, wie dies in Fig 1 erkennbar ist. Die Bewegung des Zugstange 21 weg von dem Gehäuse 11 verschwenkt die Streben 26 aus der zu der Zugstange 31 parallelen Lage in eine dagegen abgewinkelte Stellung, wobei die Schlitten 29 sich gleichzeitig aus der Nähe von der Mitte der Zugstange 31 weg in Richtung auf das jeweils benachbarte Ende bewegen. Die Schwenkbewegungen werden hierzu in dem Scharnier 31 und dem Scharnierkloben 28 aufgenommen.

Sobald eine solche Länge des Sicherheitsnetzes 12 aus dem Gehäuse 11 herausgezogen ist, wie benötigt wird, damit die Verankerungsglieder 23 in den Aufnahmetaschen 24 eingehängt werden können, kommen die beiden Schlitten 29 in einen Bereich ihres Führungsschlitzes, der nicht mehr von der Klappe 33 überdeckt wird. Die Klappe 33 wird ab dieser Stelle von den Schlitten 29 nicht mehr von der Zugstange 21 weggehalten, sondern sie kann sich unter der Wirkung ihrer Vorspannfeder an die Zugstange 21 anlegen. In der angelegten Stellung befindet sie sich im Lichtraumprofil des Schiebewegs der beiden Schieber 29.

Wenn der Benutzer das Sicherheitsnetz 12 über diesen Punkt hinaus aus dem Gehäuse 11 herauszieht und anschließend die Zugstange 21 los lässt, kann der Federmotor 14 das Sicherheitsnetz 12 nur so weit wieder in das Gehäuse 11 zurückziehen, bis die beiden Schlitten 29 an die in Längsrichtung der Zugstange 21 gelegenen Enden der Klappe 33 anstoßen. Eine weitere Bewegung der Schlitten 29 wird durch die Klappe 33 verhindert. Die Schlitten 29 werden durch die Klappe 33 auf einem definierten Abstand voneinander gehalten. Dieser Abstand legt den Winkel fest, den die Streben 26 miteinander einschließen und damit auch den Abstand der Zugstange 21 von dem Gehäuse 11.

Die Zugstange 21 ist jetzt über die beiden Streben 26 starr gegenüber dem Gehäuse 11 abgestützt. Die beiden Streben 26 verlaufen unter einem schrägen Winkel und bilden zusammen mit dem entsprechenden Abschnitt der Zugstange 21 und dem entsprechenden Abschnitt des Gehäuses 11 ein gleichschenkeliges formstabiles Trapez; gleichsam einen Spannrahmen für das Sicherheitsnetz.

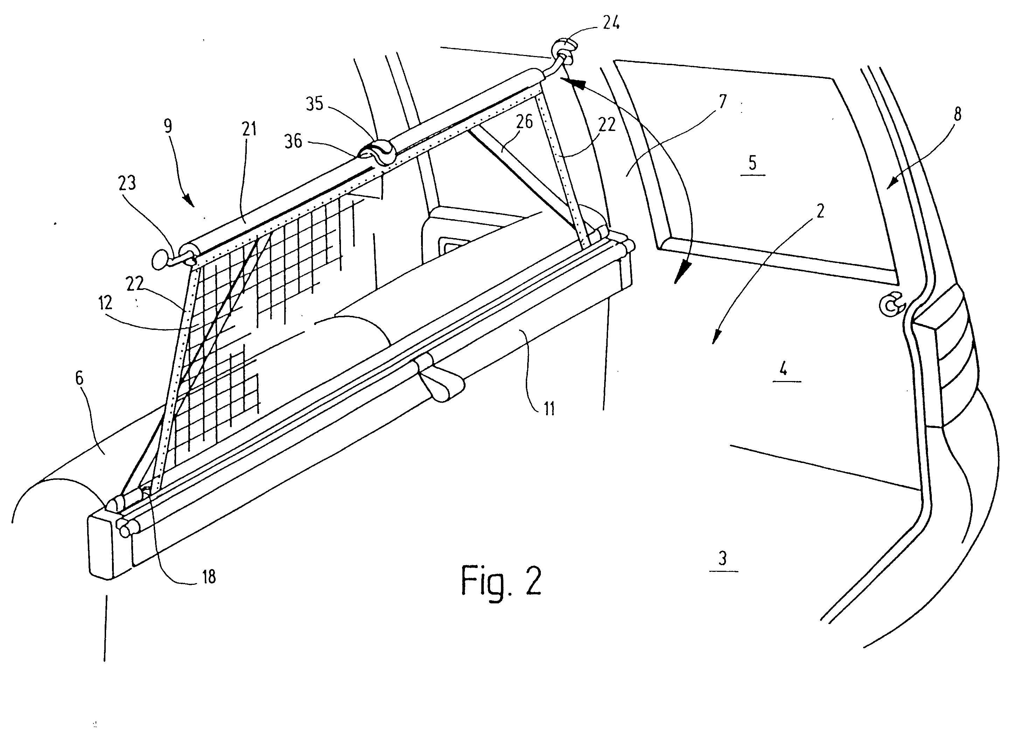

Der Benutzer kann nun ohne weitere Kraftanstrengung die Zugstange 21 aus der Lage nach Fig.1 nach oben führen, wobei sie eine Kreisbewegung um die Achsen der Scharnierkloben 28 vollführt. Am Ende der Hochschwenkbewegung gleiten, wie Fig. 2 erkennen lässt, die Verankerungsglieder 23 in die Aufnahmetaschen 24. Die Öffnung oberhalb der Rücksitzlehne 6 ist durch das Sicherheitsnetz 12 verschlossen.

Das an sich elastische und flexible Sicherheitsnetz 12, das zudem unter der Vorspannung durch den Federmotor 14 steht, kann nach oben geschwenkt werden, ähnlich wie ein vollkommen starres Gebilde. Die Streben 26 und die Zugstange 21 bilden für das Sicherheitsnetz 21 bei der Handhabung einen starren Rahmen.

Das Einrasten der Verankerungsglieder 23 in den Aufnahmetaschen 24 wird noch weiter vereinfacht, wenn die Aufnahmetaschen 24 mit einer Art Einlauftrichter versehen sind, der dafür sorgt, dass bei der Einrastbewegung schließlich noch ein kurzes Stück Sicherheitsnetz 12 aus dem Gehäuse 11 herausgezogen wird.

Ersichtlicherweise braucht der Benutzer während des Hochführens der Zugstange 21 zu den Aufnahmetaschen 24 nicht ständig eine Gegenkraft gegenüber der Rückzugskraft des Federmotors 14 aufzubringen. Das Einführen der Verankerungsglieder 23 in die Aufnahmetaschen 24 erfolgt fast kräftefrei. Der Benutzer muss nicht, wie sonst üblich, mit ausgestreckten Armen die Zugstange 21 gegen die Wirkung des Federmotors 14 hochzuheben.

Das Einfahren des Sicherheitsnetzes 12 geschieht sinngemäß in umgekehrter Weise, indem zunächst die Verankerungsglieder 23 aus den Aufnahmetaschen 24 herausgezogen werden, wozu das Überwinden der Rastkraft genügt. Sodann wird die Zugstange 21 nach unten bewegt, wobei die Bewegung wiederum durch die Streben 26 geführt ist. Am Ende der Bewegung legen sich die Streben 26 auf der Oberseite des Gehäuses 11 auf. Der Benutzer kann jetzt mit einem Finger durch die Grifföse 36 greifen und mit dem Daumen die Lasche 35 niederdrücken. Dadurch hebt er die Klappe 33 aus dem Lichtraumprofil der Schlitten 29 heraus, die sich nun frei aufeinander zu bewegen können. Dies ermöglicht es, dass die Zugstange 21 an das Gehäuse 11 herangeführt werden kann, wobei gleichzeitig der Federmotor 14 das Sicherheitsnetz 12 aufwickelt. Die Endstellung ist erreicht, wenn die Zugstange 21 an dem Auslaufschlitz 18 auf egt. In dieser Position verlaufen die Streben 26 wieder parallel zu der Zugstange 21 und zu der Wickelwelle 13.

Sollte bei aufgespanntem Sicherheitsnetz 12 ein Crash erfolgen und Gegenstände aus dem Laderaum 3 in das Sicherheitsnetz 12 fliegen, wird ein weiteres Abziehen des Sicherheitsnetzes von der Wickelwelle 13 durch die gezahnte Lippe 19 verhindert. Deren Zähne greifen in die Maschen des Sicherheitsnetzes 12 ein und verriegeln eine Auszugsbewegung.

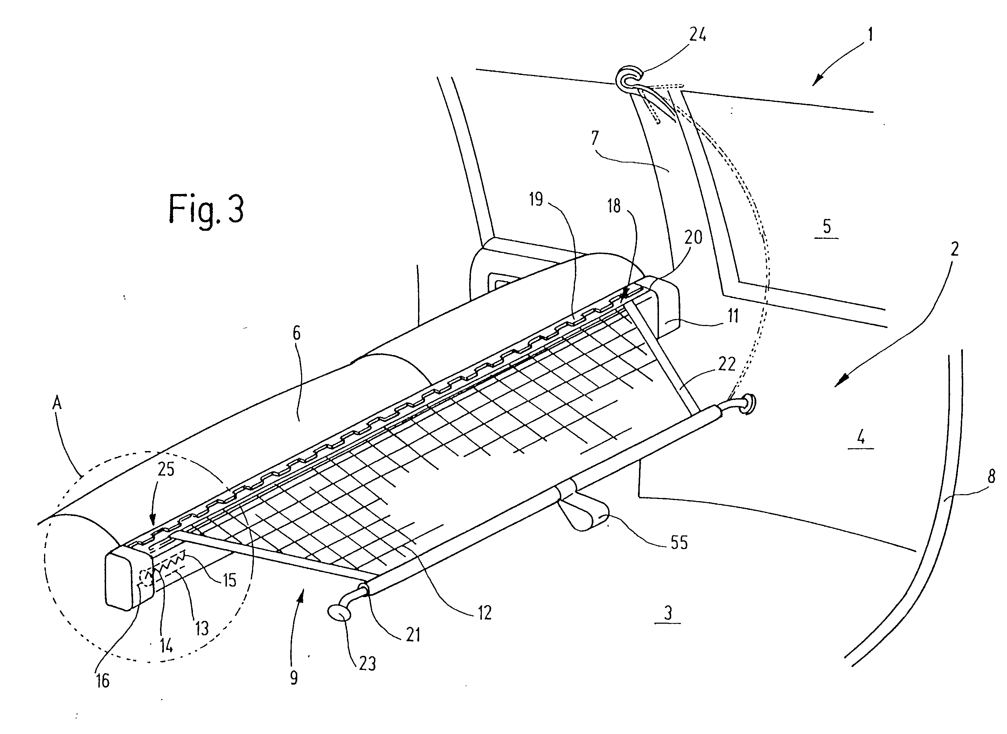

In den Figuren 3 bis 7 ist ein Ausführungsbeispiel gezeigt, bei dem die Halteeinrichtung 25 mit dem Sicherheitsnetz 12 zusammenwirkt. Soweit in den Figuren Bauteile und Komponenten wiederkehren, die bereits im Zusammenhang mit den Figuren 1 und 2 erläutert sind werden sie nicht erneut beschrieben.

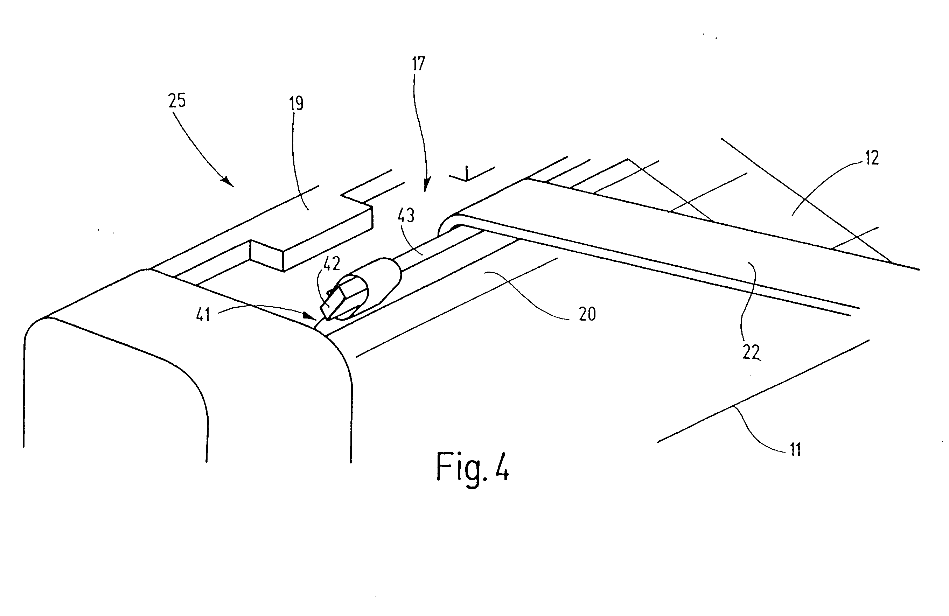

Um die Bedienung der neuen Sicherheitsnetzanordnung 9 zu vereinfachen, sind an beiden Seiten des Sicherheitsnetzes 12 zwei spiegelbildliche Halteeinrichtungen 25 vorgesehen. Der Aufbau der Halteeinrichtungen 25 ist besser aus Fig. 4 zu ersehen, der einen vergrößerten Ausschnitt des mit dem strichpunktierten Kreis A umrahmten Bereichs zeigt. Da die Halteeinrichtungen 25 an beiden Seiten des Sicherheitsnetzes 12, wie erwähnt, gleich sind, genügt die Erläuterung der dem Betrachter zugekehrten Halteeinrichtung 25.

Die Halteeinrichtung 25 ist eine formschlüssig wirkende Halteeinrichtung und sie weist zwei miteinander zusammenwirkende Fangmittel 41 und 42 auf, von denen das eine als stationäres Haltemittel 41 an der Lippe 20 und das andere als bewegliches Haltemittel 42 an dem Sicherheitsnetz 12 befestigt ist.

Das an dem Sicherheitsnetz 12 befestigte Fangmittel 42 sind die Enden einer im Querschnitt rechteckigen, im Wesentlichen formstabilen Stange oder Strebe 43.

Die Strebe 43 ist auf der der Laderaumöffnung 8 zugekehrten Seite des Sicherheitsnetzes 12 befestigt und läuft über die gesamte Breite des Sicherheitsnetzes 12 durch. An beiden Seitenkanten, die von den Einfassbändern 22 gebildet sind, steht die Strebe 43 ein entsprechendes Stück weit über, damit, wie erwähnt, ihre Enden 42 das mit dem Sicherheitsnetz 12 verbundene Fangmittel bilden können. Sie verläuft parallel und im Abstand zu der Zugstange 21; der genaue Abstand ergibt sich aus der Funktionsbeschreibung.

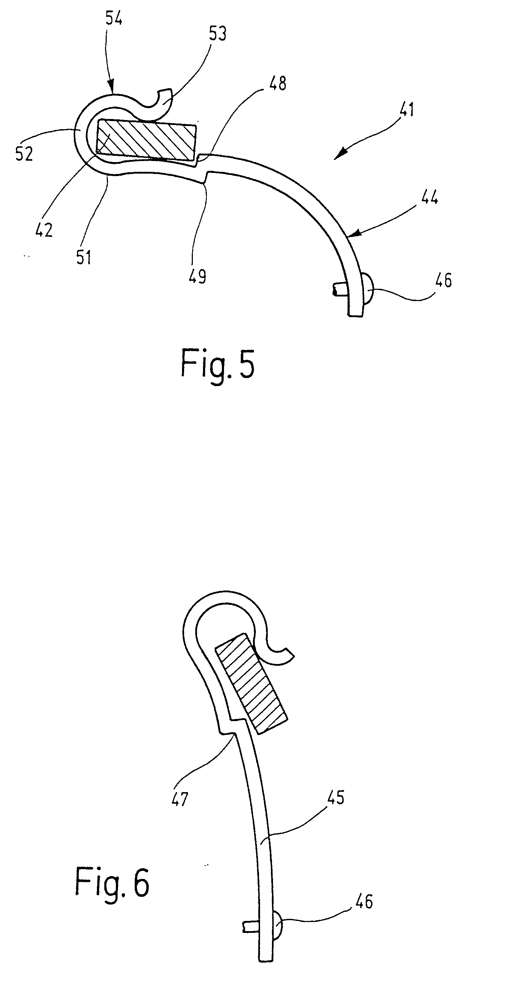

Das andere Fangmittel 41 ist ortsfest und besteht aus einem Federstahlband 44, das, wie in den Fig. 5 und 6 gezeigt, gebogen ist. Das Federstahlband 44 bildet im kräftefreien Zustand, wie ihn Fig. 5 erkennen lässt, einen im Wesentlichen geraden oder nur leicht gekrümmten Stiel 45, der an seinem unteren Ende, beispielsweise mittels eines Niets 46, im Inneren des Gehäuses 11 an der Lippe 20 festgenietet ist. Die Lippe 20 ist in den Fig. 5 und 6 nicht gezeigt.

An dem von dem befestigten Ende abliegenden Ende ist das Federband 44 bei 47 in Richtung von dem Schlitz 18 weg abgewinkelt, wodurch eine Stufe 48 entsteht. Bei 49 ist das Federband 44 erneut in Richtung parallel zu dem Stiel 45 umgebogen, und zwar in einem solchen Abstand, dass die dadurch entstehende Stufe 48 schmäler ist als es der Dicke der Strebe 43 entspricht.

Ausgehend von der Biegestelle 49 verläuft das Federband 44 im Wesentlichen bis zu einer Stelle 51 gerade und geht dort in einen 180°-Bogen 52 über, an dessen freiem Ende das Federband 44 unter Ausbildung einer Einlaufschräge 53 S-förmig nach außen gebogen. Hierdurch entsteht ein Haken 54, dessen lichte Weite ausreicht, um das Fangmittel 42, d.h. das überstehende Ende der Strebe 43 aufzunehmen.

Im eingebauten Zustand führt der Stiel 45 durch den Schlitz 18 nach innen, während der Haken 54 wie gezeigt aus dem Schlitz 18 hervorsteht. Der Haken 54 ist in Richtung auf die Wickelwelle 13 zu offen und seine Hakenöffnung befindet sich auf derjenigen Seite des Stiels 45, die der Lippe 19 zugekehrt ist, damit die nachstehend beschriebene Funktion Zustande kommen kann.

Die Funktionsweise der insoweit beschriebenen Sicherheitsnetzanordnung ist wie folgt:

Im Ruhezustand ist das Sicherheitsnetz 12 vollständig auf die Wickelwelle 13 aufgewickelt. Die Schlaufe des Sicherheitsnetzes 12 mit der darin enthaltenen Zugstange 21 liegt von außen auf den beiden Lippen 19 und 20 des Auslaufschlitzes 18 auf.

Wenn der Benutzer bei aufgestellter Rücklehne 6, wie sie in Fig. 1 gezeigt ist, das Sicherheitsnetz 12 in die Aufnahmetaschen 24 über den C-Säulen einhängen will, zieht er mit Hilfe einer an dem Sicherheitsnetz 12 befestigten Betätigungsschlaufe 55 in Richtung auf die Laderaumöffnung 8 das Sicherheitsnetz 12 aus dem Gehäuse 11 heraus. Hierbei wickelt sich das Sicherheitsnetz 12 entgegen der Wirkrichtung des Federmotors 14 von der Wickelwelle 13 ab.

Während des Abziehens oder Herausziehens des Sicherheitsnetzes 12 gleitet es über die glatte Lippe 20 und es bewegt sich im Wesentlichen in einer horizontalen Ebene. Im Verlaufe dieser Ausziehbewegung wird irgendwann entsprechend dem Abstand der Zugstange 21 von der Strebe 43 die Strebe 43 aus dem Schlitz 18 herausgezogen. Während dieser nach außen gerichteten Bewegung kommen die überstehenden Enden 42 mit dem Stiel 45 des ortsfesten Fangmittels 41 in Eingriff und biegen den Stiel 45 federelastisch, wie Fig. 5 zeigt, um die Lippe 20 herum. Während der weiteren Bewegung gelangen die überstehenden Enden 42 in den Haken 54, wobei sie von der Einlaufschräge 53 in den Haken 54 zuverlässig eingefädelt werden.

Sobald sich einmal die mit dem Sicherheitsnetz 12 beweglichen Fangmittel 42 in Gestalt der überstehenden Enden der Strebe 43 in den beiden ortsfesten Haken 54 verhakt haben, ist keine weitere Auszugsbewegung des Sicherheitsnetzes 12 mehr möglich. Der Benutzer spürt einen entsprechend deutlichen Widerstand und ihm wird durch die jetzt wirksam gewordene Halteeinrichtung 25 signalisiert, dass recht genau diejenige Menge an Sicherheitsnetz 12 ausgezogen ist, die ausreicht, die Verankerungsmittel 23 in die Aufnahmetaschen 24 einzuhängen. Der Benutzer kann jetzt blind, ohne den Einhängvorgang zu beobachten, mit Hilfe der Schlaufe 55, die ihm zunächst benachbarte Kante des Sicherheitsnetzes 12 mit der Zugstange 21 blind nach oben führen, wobei das Sicherheitsnetz 12 eine Schwenkbewegung um die Strebe 43 bzw. wenn der bewegliche Stiel 45 des ortsfesten Fangmittels 41 hinzugenommen wird, um den Niet 46 vollführt. Das Sicherheitsnetz 12 dient als Abstandshalter und sorgt dafür, dass zwangsläufig die Verankerungsglieder 23 in die Aufnahmetaschen 24 gelangen.

Während dieser Hochschwenkbewegung richten sich die Stiele 45 aus der Stellung, wie sie in Fig. 5 gezeigt ist, wieder in die Stellung nach Fig. 6 auf. Da darüber hinaus der Abstand der Aufnahmetaschen 24 von dem Gehäuse 11 etwas kleiner ist als es der ausgezogenen Menge an Sicherheitsnetz 12 entspricht, zieht die Wickelwelle 13 den geringen überschüssigen Anteil an Sicherheitsnetz 12 wieder in das Gehäuse 11 zurück. Diese Bewegung ist eine Bewegung aus dem Haken 54 heraus und wird an sich durch die Stufe 48 behindert. Da jedoch die Stufe 48 nicht exakt scharfkantig ist, sondern eine gewisse Restschräge aufweist, wirkt sie wie ein Rastmittel, das nach Überwinden einer entsprechenden Kraft die Strebe 26 freigibt, womit am Schluss des Einhängens eine Stellung, etwa wie in Fig. 6 gezeigt, erreicht wird oder eine Stellung, in der die Strebe 43 vollständig aus dem Haken 54 freigekommen ist.

Der Zweck der Stufe 48 besteht darin, einen Teil der Rückzugskraft der Wickelwelle 13 aufzufangen, damit der Benutzer, wenn er mit dem ausgestreckten Arm die Zugstange 21 zu den Aufnahmetaschen 24 nach oben bewegen muss, nicht die volle Gegenkraft zur Rückzugskraft des Sicherheitsnetzes 12 aufbringen muss. Allerdings ist die Haltekraft kleiner als die Rückzugskraft, damit in jedem Falle die Wickelwelle 13 beim Einfahren des Sicherheitsnetzes 12 die Strebe 43 aus dem Haken 54 herausziehen kann.

Wenn bei aufgespanntem Sicherheitsnetz 12 von dem Laderaum 2 her ein Gegenstand in das Sicherheitsnetz 12 geschleudert wird, wird es unter der Wirkung dieses Gegenstandes nach vorne in Richtung auf die gezahnte Lippe 19 gedrückt, wodurch sich die Maschen des Sicherheitsnetzes 12 in der Verzahnung der gezahnten Lippe 19 verhängen und ein weiteres Abwickeln des Sicherheitsnetzes 12 von der Wickelwelle 13 blockiert wird.

Zum Einfahren des Sicherheitsnetzes 12 genügt es, die Verankerungsglieder 23 aus den Aufnahmetaschen 24 auszuhängen und das Sicherheitsnetz 12 zurücklaufen zu lassen.

Wenn bei umgelegter Rücksitzlehne 6 und am Boden befestigtem Gehäuse 11 eine größere Auszugsmenge benötigt wird, kann in aller Regel ohnehin die Handhabung nicht mehr von der Laderaumöffnung 8 her erfolgen. Das Gehäuse 11 wird sich in der Nähe der Rücksitzlehne der Vordersitze befinden, weshalb die Bedienung durch die hinteren Türen erfolgen muss. Bei dieser Bedienungsart ist die Auszugsrichtung des Sicherheitsnetzes 12 nicht mehr, wie vorbeschrieben, etwa horizontal, sondern mehr vertikal. Wenn der Stiel 45 der Fangmittel 41 von Haus aus etwas gekrümmt ist, sind bei der vertikalen Bewegung des Sicherheitsnetzes 12 die Haken 54 außerhalb des Bewegungswegs der Strebe 43 und diese wird sich beim vertikalen Ausziehen des Sicherheitsnetzes 12 nicht in den Haken 54 einhängen, so dass die volle Auszugslänge zur Verfügung steht.

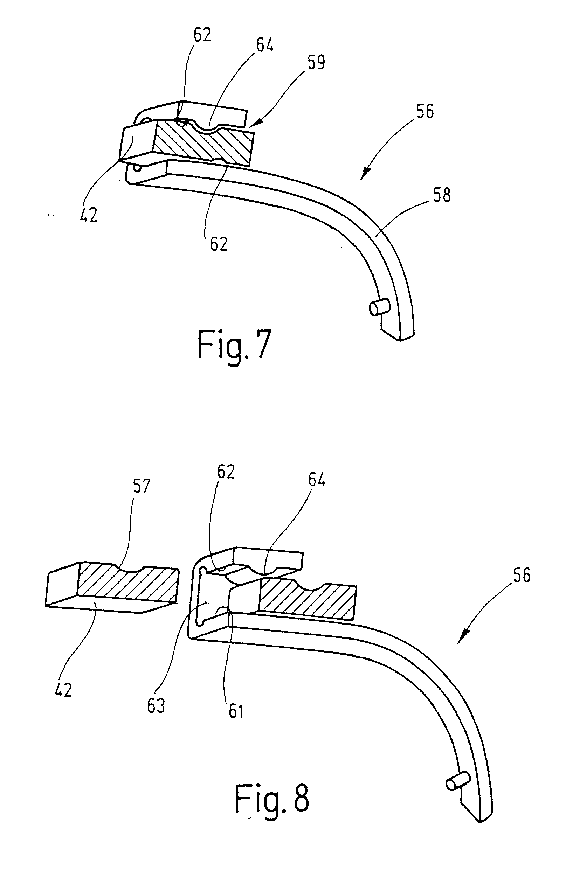

Anstelle einer formschlüssig wirkenden Halteeinrichtung 25, die den Auszugsweg definitiv festlegt, kann auch eine Halteeinrichtung 25 verwendet werden, die bei genügender Betätigungskraft überwindbar ist. Eine solche Halteeinrichtung 25 ist in unterschiedlichen Betriebsstellungen stark schematisiert in den Fig. 7 und 8 gezeigt. Zu ihr gehört wiederum ein ortsfestes Rastmittel 56 sowie ein mit dem Sicherheitsnetz 12 bewegbares Rastmittel 42. Dieses bewegliche Rastmittel 42 sind wiederum die seitlich überstehenden Enden der Strebe 43, die auf einer Flachseite mit einer Rastmulde oder -nut 57 versehen ist, die in Längsrichtung der Strebe 43 verläuft.

Ähnlich wie das Fangmittel 41 weist das ortsfeste Rastmittel 56 einen biegsamen Stiel 58 auf, dessen unteres Ende mit einem Niet 46 im Inneren des Gehäuses 11 befestigt ist. An dem oberen Ende ist der Stiel 58 mit einer zu beiden Seiten hin offenen Nut 59 versehen, die von zwei zueinander parallelen Nutenwänden 61 und 62 begrenzt ist. Beide Nutwände 61 und 62 sind über ein Rückenteil 63 einstückig miteinander verbunden. Im montierten Zustand befindet sich die Nut 59 außerhalb des Auslaufschlitzes 18.

Diese Konfiguration kann erhalten werden, entweder indem ein entsprechendes Stück Federband geschnitten und gebogen wird oder als biegeelastisches Kunststoff-Formteil.

An der Nutseitenwand 62 befindet sich eine nach innen in die Nut 59 vorspringende Rippe 64, die zu der Rastnut 57 komplementär ist. Im gezeigten Falle ist die Querschnittsgestalt der Rippe 64 etwa teilkreisförmig.

Die Funktionsweise der nicht formschlüssig wirkenden Halteeinrichtung nach den Fig. 7 und 8 ist ähnlich, wie dies vorher im Zusammenhang mit den Fig. 3 bis 6 erläutert ist.

Beim Ausziehen des Sicherheitsnetzes 12 in horizontaler Richtung kommt die Strebe 43 mit dem Stiel 58 des ortsfesten Rastmittels 56 in Berührung. Dieser steht vor dem Eingriff zwischen dem Stiel 58 und der Strebe 43 im Wesentlichen vertikal nach oben und wird durch die darüber gleitende Strebe 43 in Bewegungsrichtung des Sicherheitsnetzes 12 um die Lippe 20 umgebogen. Beim weiteren Ausziehen des Sicherheitsnetzes 12 gelangen die Enden der Strebe 43 in die betreffenden Nuten 59. Dabei weitet sich die Nut 59 auf, sobald die Strebe 43 an der Rippe 64 anstößt. Beim weiteren Ziehen an dem Sicherheitsnetz 12 gleitet die Strebe 43 unter der Rippe 64 durch, solange, bis die Nut 57 mit der Rippe 64 verrastet. Dies signalisiert dem Benutzer, dass nun eine genügende Menge an Sicherheitsnetz 12 ausgezogen ist, damit, wie vorher beschrieben, die Verankerungsmittel 23, geführt durch die Länge des abgewickelten Netzes 12, in die Aufnahmetaschen 24 eingehängt werden können. Beim Einhängen wird sich der Stiel 58, ausgehend von der Lage nach Fig. 8, wieder strecken.

Durch entsprechende Konturierung der Rippe 64 sowie der Rastnut 57 bzw. den schmalen Kanten der Strebe 43, lassen sich die Kräfte steuern, die notwendig sind, um die Verrastung der Rippe 64 in der Rastnut 57 zu erhalten bzw. aufzulösen. Zweckmäßigerweise bekommt die Rippe 64 hierzu eine etwa sägezahnförmige Querschnittsgestalt, wobei die steilere Flanke von der Wickelwelle 13 wegweist. Dadurch kann erreicht werden, dass die Verrastung einen Teil der Rückzugskraft der Wickelwelle 13 aufnimmt, um, wie vorher erläutert, den Bedienungskomfort zu erhöhen.

Falls nicht die erläuterte Zwischenstellung des Sicherheitsnetzes 12 benötigt wird, sondern die volle Auszugslänge, kann der Benutzer mit entsprechend größerer Kraft die Verrastung zwischen der Rippe 64 und der Rastnut 57 überwinden, um die Strebe 43 zum von dem Stiel 58 abliegenden Ende aus der Nut 59 herauszuziehen, wie dies Fig. 8 links zeigt.

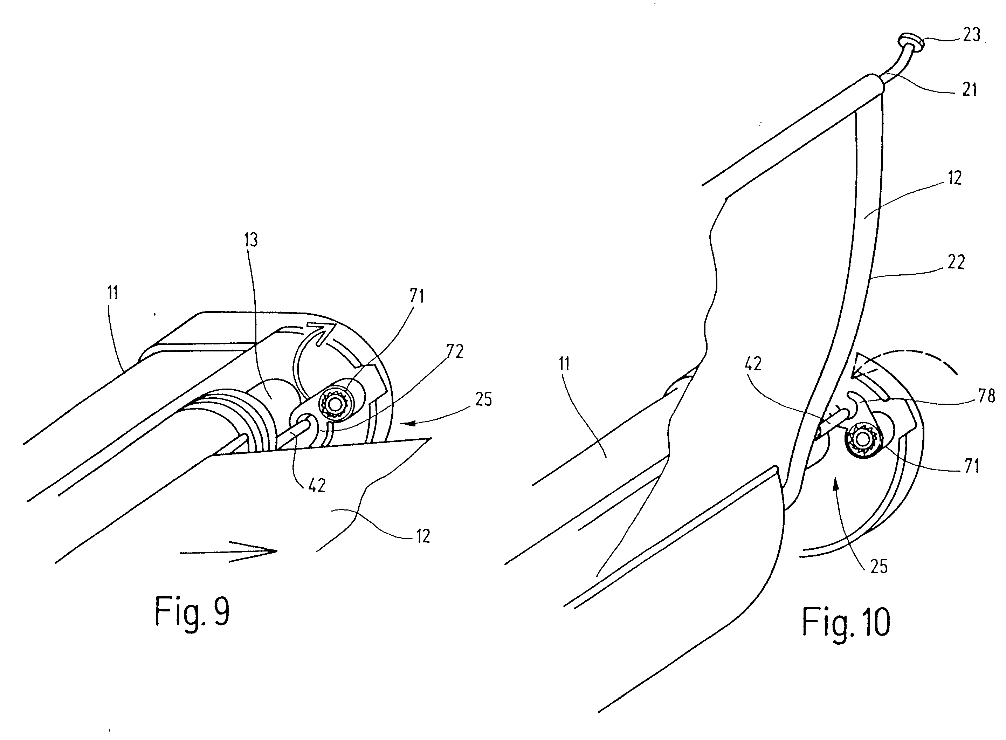

Fig. 9 zeigt ein Ausführungsbeispiel der Sicherheitsnetzanordnung 9 in einer stark schematisierten Darstellung, wobei der Halteeinrichtung 25 ein Zeitglied 71 zugeordnet ist.

Soweit bei diesem Ausführungsbeispiel Bauelemente und Komponenten auftauchen, die bereits beschrieben sind bzw. homolog wirken oder aufgebaut sind, werden dieselben Bezugszeichen verwendet, ohne dass eine weitere detaillierte Erläuterung gegeben wird.

Die Halteeinrichtung 25 bei dem Ausführungsbeispiel nach den Fig. 9 bis 13 umfasst wiederum eine mit dem Sicherheitsnetz 12 verbundene kurze Stange 43, die mit ihrem Ende 42 über die Kante des Sicherheitsnetzes 12 übersteht und im Einfassband 22 befestigt ist; sie ragt in Richtung Sicherheitsnetz nicht über das Einfassband hinaus.

Diese Stange 43 bildet das bewegliche Haltemittel der Halteeinrichtung 25.

Das ortsfeste Haltemittel der Halteeinrichtung 25 besteht aus einem Verriegelungshebel 72, der achsparallel zu der Wickelwelle 13 innerhalb des Gehäuse 11 an dessen Stirnseite schwenkbar gelagert ist. Der Verriegelungshebel 72 weist an einem Ende eine Bohrung 73 auf. Mit dieser Bohrung 73 steckt er drehbar auf einem Gehäuse 74 einer Viskosebremse, die das Zeitglied 71 darstellt. Bei der Viskosebremse handelt es sich um ein handelsübliches Bauelement, so dass dessen genauer Aufbau nicht erläutert werden muss. Im Wesentlichen besteht es aus einem ortsfesten Teil und dem darauf drehbaren zylindrischen Gehäuse 74, wobei zwischen dem festgesetzten Verankerungsteil und dem Gehäuse 74 ein mit einer hochviskosen Flüssigkeit gefüllter Spalt vorhanden ist.

Das Gehäuse 74 ist außen zylindrisch und geht an einer Stirnseite 75 in ein einstückig angeformtes Klinkenzahnrad 76 über. Mit diesem Klinkenzahnrad 76 wirkt eine Rastklinke 77 zusammen, die federelastisch an dem Verriegelungshebel 72 im Bereich von dessen Lagerbohrung 73 einstückig angeformt ist. Die Ausrichtung der Zähne des Klinkenschaltrades 76 sowie die Wirkrichtung der Rastklinke 77 ergeben sich aus der nachfolgenden Funktionsbeschreibung.

Parallel zu dem Verriegelungshebel 72 verläuft im Abstand dazu ein Mitnehmer 78, der zusammen mit dem Verriegelungshebel 72 eine Art Haken bildet. Das von der Lagerbohrung 73 abliegende Ende des Verriegelungshebels 72 ist mit einer Öse 79 versehen, in die eine Zugfeder 81 eingehängt ist, deren anderes Ende bei 82 mit dem Gehäuse 11 verbunden ist.

Die Wirkungsweise der insoweit beschriebenen Anordnung ist wie folgt:

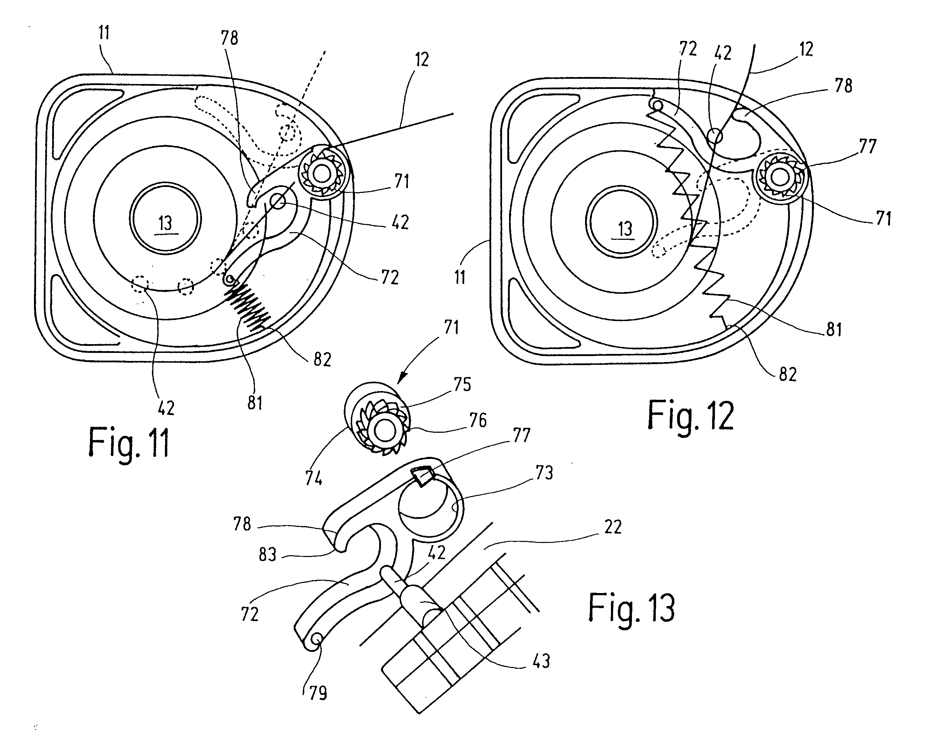

Zunächst sei angenommen, dass das Sicherheitsnetz 12 vollständig auf die Wickelwelle 13 aufgewickelt ist. In dieser Stellung befindet sich das Stangenende 43 in einem radialen Abstand von der Achse der Wickelwelle 13 entsprechend dem betreffenden Ballendurchmesser. Der Verriegelungsarm 72 steht aufgrund der Wirkung der Zugfeder 81 in der in Fig. 11 gezeigten Stellung. In dieser Stellung zeigt der Mitnehmerhebel 78, ausgehend von der Lagerbohrung 73, etwa in Richtung auf die Achse der Wickelwelle 13.

Wenn, ausgehend von dieser Betriebsstellung, das Sicherheitsnetz 12 an der Zugstange 21 aus dem Gehäuse 11 herausgezogen wird, wird die Wickelwelle 13 mit dem darauf befindlichen Ballen an Sicherheitsnetz 12 in Umdrehungen versetzt. Sie dreht sich, bezogen auf Fig. 11, im Gegenuhrzeigersinne.

Die Länge des Mitnehmerhebels 78 ist so bemessen, dass sein freies Ende 83 einen radialen Abstand von der Achse der Wickelwelle 13 hat, dass das Strebenende 42 bei der Rotation der Wickelwelle 13 das Ende 83 des Mitnehmers 78 frei passieren kann, und zwar solange, wie sich die Strebe 43 auf oder in dem Ballen aus Sicherheitsnetz 12 befindet. Der Verriegelungshebel 72 befindet sich mit seinem äußeren Ende ebenfalls außerhalb des Flugkreises, den die auf dem Ballen oder in dem Ballen befindliche Strebe 43 beschreibt.

Sobald das Sicherheitsnetz 12 so weit abgewickelt ist, dass auch die Strebe 43 von der Außenseite des Ballens freikommt, gelangt ihr Ende 42 in den zwischen dem Mitnehmer 78 und dem Verriegelungshebel 72 gebildeten Haken. Dies wird durch eine entsprechende Lage der Lippe 20 in Bezug auf den Mitnehmerhebel 78 erreicht.

Wenn sich das Strebenende 43 hinter dem Mitnehmerhebel 78 verhängt, führt das weitere Herausziehen des Sicherheitsnetzes 12 aus dem Gehäuse dazu, dass der Mitnehmerhebel 78 zusammen mit dem Verriegelungshebel 72 aus der in Fig. 11 gezeigten Stellung in die in Fig. 12 gezeigte Stellung gedreht wird. Dabei drehen sich diese beiden Hebel 72 und 78 mit der Lagerbohrung 73 auf der zylindrischen Außenfläche des Gehäuses 74 der Viskosebremse 71.

Der aus dem Klinkenrad 76 und der Rastklinke 77 gebildete Freilauf ist so gestaltet, dass bei einer Verschwenkung des Verriegelungshebels 72 im Uhrzeigersinne, d.h. aus der Stellung nach Fig. 11 in die Stellung nach Fig. 12, keine Behinderung durch die Viskosebremse 71 entsteht, wenn das Sicherheitsnetz 12 herausgezogen wird.

Gleichzeitig mit der Verschwenkung des Verriegelungshebels 72 wird auch die Zugfeder 81 gespannt.

Wenn die Stellung nach Fig. 12 erreicht ist, liegt der Verriegelungshebel 72 erkennbar im Bewegungsweg des Strebenendes 43. In dieser Stellung ist so viel von dem Sicherheitsnetz 12 von der Wickelwelle 13 abgezogen, dass der Benutzer spannungsfrei die Verankerungsglieder 23 in die Aufnahmetaschen 24 einhängen kann. Wenn der Benutzer in dieser Stellung das Sicherheitsnetz 12 entspannt, wird die von dem Federmotor 14 aufgebrachte Rückzugskraft von dem Verriegelungshebel 72 aufgenommen, an den sich das Strebenende 42 anlegt. Der Verriegelungshebel 72 wird über das Zusammenwirken der Rastklinke 77 an die Viskosebremse angekoppelt. Diese ist nur langsam zurückzudrehen, womit die Rückbewegung des Verriegelungshebels 72 in die Freigabestellung stark verlangsamt ist.

Da die Bremse 71 eine Viskosebremse ist, wirkt sie nicht wie ein Sperrglied, sondern wie ein Verzögerungsglied, das bei von außen wirkendem Drehmoment eine langsame Drehung ermöglicht. Die Viskosebremse 71 wird folglich ein Rückdrehen des Verriegelungshebels 72 in die Stellung nach Fig. 11 nicht blockieren, sondern nur verlangsamen und der Verriegelungshebel 72 kehrt unter der Wirkung der Zugfeder 81 schlussendlich in die Lage nach Fig. 11 zurück. Damit kann die Wickelwelle 13 ohne Behinderung durch den Verriegelungshebel 72, in dem sich das Strebenende 43 verfangen hat, das Sicherheitsnetz 12 straffen.

Wenn der Benutzer das Sicherheitsnetz 12 vollständig einfahren lassen will, hängt er die Verriegelungsglieder 23 aus den Aufnahmetaschen 24 aus und lässt die Zugstange 21 in Richtung auf den Schlitz 18 zurücklaufen. Dabei gleitet das Strebenende 43 über die Rückseite des inzwischen nach unten geschwenkten Mitnehmerhebels 78 und gelangt auf die Außenseite des aufgewickelten Ballens aus Sicherheitsnetz 12, womit das Strebenende 43 aus dem Wirkbereich des Mitnehmers 78 freigekommen ist.

Aus der oben gegebenen Erläuterung geht hervor, dass der Benutzer eine begrenzte Zeit zum Einhängen der Verankerungsglieder 23 zur Verfügung hat. Diese Zeit bemisst sich aus der Verzögerungszeit, die der Verriegelungshebel 72 benötigt, bis er unter der Wirkung der auf ihn einwirkenden Kräfte so weit in Richtung auf die Stellung nach Fig. 11 zurückgedreht ist, dass er ein Zurückziehen des Sicherheitsnetzes 12 nicht mehr behindert. Diese Verzögerungszeit ist eine Funktion der Charakteristik der Viskosebremse 71 und der auf den Mitnehmerhebel 72 einwirkenden Kraft, die sich aus der Rückzugskraft des Sicherheitsnetzes 12 und der Kraft der Feder 81 zusammensetzt.

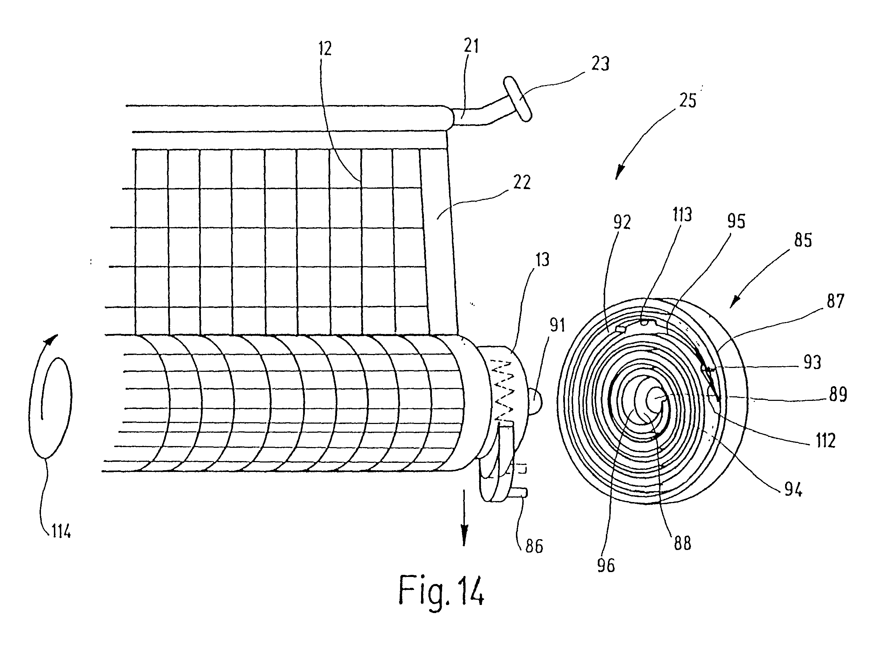

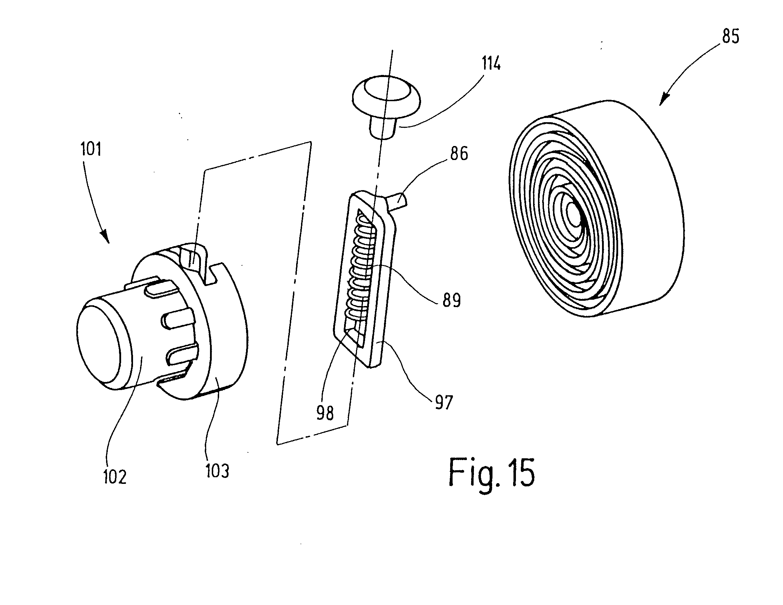

Fig. 14 bis 18 zeigen ein Ausführungsbeispiel einer Sicherheitsnetzanordnung 9, bei der die Halteeinrichtung 25 zwischen dem Gehäuse und der Wickelwelle 13 wirkt.

Auch bei diesem Ausführungsbeispiel werden für bereits beschriebene Bauelemente und Komponenten dieselben Bezugszeichen verwendet, ohne dass eine erneute detaillierte Funktionsbeschreibung gegeben wird. Außerdem ist die Darstellung auf die für das Verständnis der Erfindung notwendigen Elemente beschränkt.

Die Halteeinrichtung 25 besteht aus einem stationären Haltemittel 85 und einem mit der Wickelwelle 13 verbundenen Folgeglied 86.

Das stationäre Haltemittel 85, das in dem nicht Gehäuse befestigt ist, hat die Gestalt eines Bechers mit einem auf die Wickelwelle 13 zuzeigenden zylindrischen Kragen 87, der von einem Boden 88 ausgeht. Konzentrisch durch den Boden 88 führt eine Bohrung 89 für einen Lagerzapfen 91 der Wickelwelle 13. Innerhalb des zylindrischen Kragens 87 verläuft spiralförmig eine Wand 92, die bei 93 beginnt und radial weiter innen bei 94 endet. Dieses radial innenliegende Ende 94 befindet sich in einem deutlichen radialen Abstand von der Bohrung 89.

Aufgrund des Verlaufs der Wand 92 entsteht in unmittelbarer Nähe der Innenseite des Kragens 87 eine kreisförmig verlaufende Nut, während zwischen benachbarten Windungen der Wand 92 eine spiralig sich erstreckende Nut 95 entsteht.

Diese Nut 95 geht radial innen in einen im Wesentlichen zylindrischen Bereich 96 über, der konzentrisch zu der Bohrung 89 ist.

Das Folgeglied 86, das die Gestalt eines zylindrischen Zapfens hat, sitzt an einem Schieber 97. Dieser Schieber 97 enthält ein über seine gesamte Länge durchgehendes, allseitig geschlossenes Langloch 98, in dem eine Schraubendruckfeder 99 untergebracht ist.

In einem die Wickelwelle 13 bildenden Rohr steckt ein im Querschnitt T-förmiges Endstück 101, das in der Wickelwelle 13 drehfest verankert ist. Dieses Endstück 101 trägt einen in die Wickelwelle 13 hineinragenden Zapfen 102, der außerhalb der Wickelwelle 13 in einen zylindrischen Flansch 103 übergeht. Der Flansch 103 weist eine von der Wickelwelle 13 abliegende Stirnseite 104 auf, an die der Lagerzapfen 91 einstückig angeformt ist, der in der Lagerbohrung 89 drehbar gelagert ist.

In dem Flansch 103 befindet sich ein über den Durchmesser des Flansches 103 verlaufendes Durchgangsloch 105, das bei 106 durch die Umfangsfläche des Flansches 103 nach außen austritt. Der Querschnitt des Durchgangslochs 105 entspricht dem Querschnitt des Schiebers 97, so dass der Schieber 97 in dem Durchgangsloch 105 unverdrehbar längsverschieblich geführt ist. Außerdem enthält der Flansch 103 einen Schlitz 107, der, ausgehend von dem Lagerzapfen 91, bis zur Umfangsseite d.h. der Öffnung 106 des Durchgangslochs 105 reicht. Er fluchtet mit dem Durchgangsloch 105 und dient als Durchtrittsöffnung für das Folgeglied 86, wenn der Schieber 97 mehr oder weniger tief in das Durchgangsloch 105 hineingleitet.

Zur Aufnahme der Druckfeder 99 ist der Querschnitt des Durchgangsloches 105 in der Mitte zylindrisch erweitert, wobei die zylindrische Erweiterung 109 an einem Ende bei 111 vor der Umfangsfläche des Flansches 103 endet.

Damit, je nach Drehrichtung, das Folgeglied 86 entweder in der kreisförmig verlaufenden Nut an der Innenseite des Kragens 87 entlanggleitet oder in die spiralig verlaufende Nut 95 zurückfindet, ist an dem radial außenliegenden Ende der Wand 92 ein Federglied 112 vorgesehen, das als Weichenmittel dient. In der Ruhestellung liegt die Blattfederzunge 112 an der zylindrischen Innenseite des Kragens 87 an.

Schließlich ist bei 113 in der spiralig verlaufenden Wand 92 eine Rastausnehmung 113 vorgesehen.

Die Funktionsweise der Halteeinrichtung nach den Fig. 14 bis 18 ist wie folgt, wobei sich aus der Funktionsbeschreibung auch der Wickelsinn der spiraligen Nut 95 ergibt:

Bei vollständig eingefahrenem Sicherheitsnetz 12 befindet sich das Folgeglied 86 innerhalb des etwa zylindrischen Abschnittes 96, wie er von dem radial innenliegenden Endbereich der Wand 92 begrenzt ist. In dieser Stellung ist der Schieber 97 maximal tief eingedrückt, d.h. das Folgeglied 86 befindet sich in praktisch unmittelbarer Nähe des Lagerzapfens 91.

Wenn, ausgehend von dieser Stellung, der Benutzer das Sicherheitsnetz 12 herausziehen möchte, um es in den Aufnahmetaschen 24 einhängen zu können, wird die Wickelwelle 14 in eine Umdrehung versetzt, wie dies durch den spiraligen Pfeil 114 angedeutet ist. Bei dieser Drehung läuft das Folgeglied 86 in die spiralige Nut 95 an ihrem radial innenliegenden Ende im Bereich des Endes 94 der spiraligen Wand 92 ein. Dieses Einlaufen wird dadurch erreicht, dass das Folgeglied 86 zufolge der Schraubendruckfeder 99 radial nach außen von dem Lagerzapfen 91 weg vorgespannt ist.

Sobald es in die spiralige Nut 95 eingelaufen ist, wird es radial zwangsweise zwischen den Wänden der spiraligen Nut 95 geführt. Nach einer entsprechenden Anzahl von Umdrehungen bzw. Teilumdrehungen der Wickelwelle 13 gelangt das Folgeglied 86 in die Rastausnehmung 113. Die Lage der Rastausnehmung 113 entspricht im vorliegenden Fall ca. 2 3/4 Umdrehungen der Wickelwelle 13. Dies wiederum entspricht einer Auszugslänge an Sicherheitsnetz 12, die ein einwandfreies Einhängen der Verankerungsglieder 23 in die Aufnahmetaschen 24 gestattet, wenn die kurze Auszugslänge benötigt wird.

Da die Rastausnehmung 113 mit steilen Seitenflanken versehen ist, rastet das Folgeglied 86 in der Rastausnehmung 113 ein. Wenn der Benutzer nach dem Einrasten die Zugstange 21 loslässt, legt sich das Folgeglied 86 an die betreffende, in Umfangsrichtung liegende Wand der Rastausnehmung 113 an. Hierdurch entsteht im Zusammenwirken mit der Druckfeder 99 eine Rastkraft, die von der Rückzugskraft der Wickelfeder 14 nicht überwunden werden kann. Der Benutzer kann nun ohne Kraftanstrengung die Verankerungsglieder 23 in die Aufnahmetaschen 24 einhängen. Sobald dies geschehen ist, betätigt er eine in dem Gehäuse vorhandene Auslösetaste 114, die sich an einer Stelle befindet entsprechend der Lage des Schiebers 97 beim Einrasten in die Rastausnehmung 113. Durch Niederdrücken der Betätigungstaste 114, die auf dasjenige Ende des Schiebers 97 einwirkt, an dem sich das Folgeglied 86 befindet, wird das Folgeglied 86 entgegen der Wirkung der Druckfeder 99 aus der Rastausnehmung 113 herausgedrückt, so dass nunmehr die Wickelfeder 14 das Sicherheitsnetz 12 spannen kann. Nach dem Spannen des Sicherheitsnetzes 12 befindet sich das Folgeglied 86 in einer Stellung, die sich zwischen der Rastausnehmung 113 und dem radial innenliegenden Ende 94 der Seitenwand 92 befindet.

Ohne weitere Betätigung der Auslösetaste 114 kann der Benutzer das Sicherheitsnetz 12 in das Gehäuse 11 zurücklaufen lassen, wobei das Folgeglied 86 mit jeder Umdrehung der Wickelwelle 13 zufolge der spiraligen Nut 95 radial in Richtung auf den Lagerzapfen 91 geführt wird.

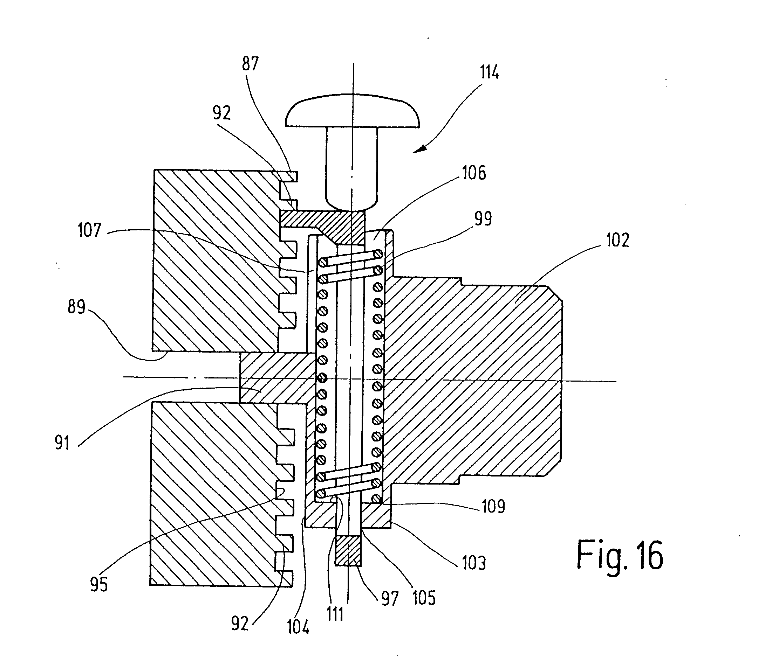

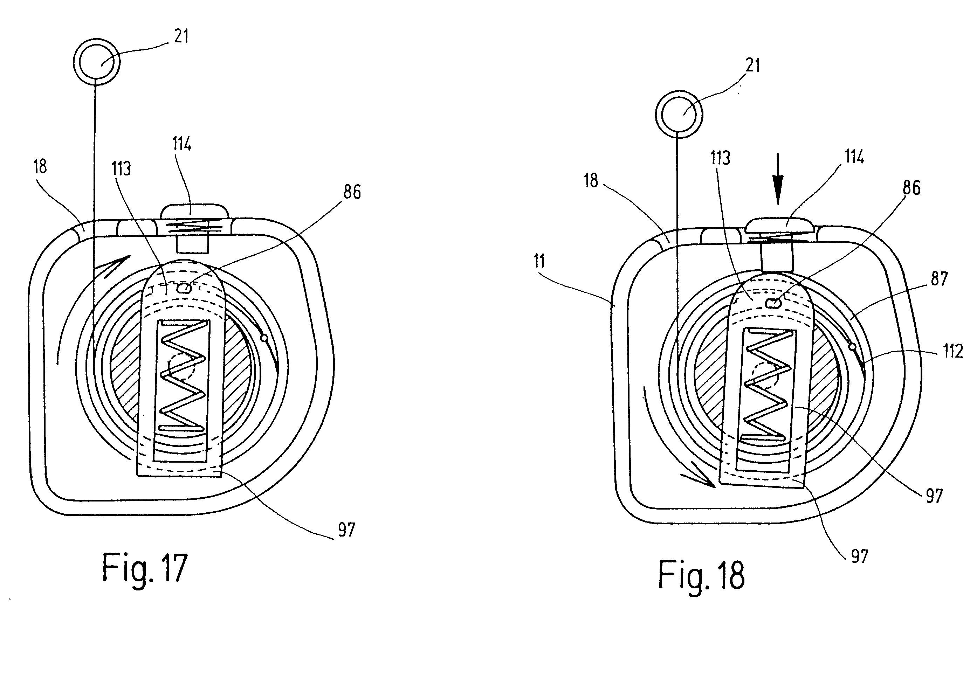

Wenn der Benutzer eine größere Menge an Sicherheitsnetz 12 benötigt, beispielsweise weil das Gehäuse 11 sich in der Nähe des Laderaumbodens befindet, gelangt er zunächst beim Herausziehen des Sicherheitsnetzes 12 wieder in eine Funktionsstellung, in der das Folgeglied 86 in der Rastausnehmung 113 verrastet. Diese Stellung ist in den Fig. 16 und 17 gezeigt. Durch Niederdrücken der Auslösetaste 114 wird das Folgeglied 86 aus der Rastausnehmung 113 ausgehoben und der Benutzer kann jetzt ungehindert durch die Rastausnehmung 113 das Sicherheitsnetz 12 weiter herausziehen. Bei der weiteren Bewegung passiert das Folgeglied 86 die als Weichenmittel dienende Blattfederzunge 114 und legt sich nunmehr an der zylindrischen Innenseite des Kragens 87 an. Nach jeder vollen Umdrehung läuft das Folgeglied 86 von der Rückseite her über die Blattfederzunge 112 und drängt diese mit ihrem freien Ende von der zylindrischen Innenfläche des Kragens 97 weg. Das Nockenfolgeglied passiert auf diese Weise ungehindert entsprechend oft die Federzunge 112.

Zum Entnehmen führt der Benutzer die Zugstange 21 in Richtung auf den Schlitz 18 zurück. Nach längstens einer fast vollen Umdrehung wird das Folgeglied 86 durch die an der Innenseite des Kragens 87 anliegende Blattfederzunge 112 abgehoben und zurück in den radial außenliegenden Anfang der Nut 95 eingefädelt. Nach einer weiteren Umdrehung von ca. 90° im gezeigten Ausführungsbeispiel gelangt das Folgeglied 86 wiederum in die Rastausnehmung 113, aus der es zum weiteren Einfahren des Sicherheitsnetzes 12 mit Hilfe der Auslösetaste 114 ausgehoben werden muss. Die ausgehobene Stellung ist in Fig. 18 gezeigt.

Nunmehr läuft das Folgeglied 86 in den weiter innenliegenden Umgängen der spiraligen Nut 95 zu dessen innerem Ende entsprechend dem Ende 94 der Wand 92.

Gleichgültig wieviel Sicherheitsnetz 12 sich noch außerhalb des Gehäuses befindet und auf der Wickelwelle 13 aufgewickelt werden muss, läuft im Freilaufsinne das Folgeglied 86 in dem nahezu zylindrischen Innenraum 96 um, ohne dass eine Behinderung der Aufwickelbewegung zustandekommt.

Der Vorteil dieser Anordnung besteht darin, dass weniger Windungen der Nut benötigt werden, als Umdrehungen zum Vollauszug des Sicherheitsnetzes erforderlich sind.

Wie sich aus der obigen Beschreibung ersehen lässt, wirkt die spiralige Nut 95 zusammen mit der Rastausnehmung 113 wie eine Art Zählwerk, das die Umdrehungen der Wickelwelle 13 erfasst, um festzulegen, nach wieviel vollständigen Umdrehungen zuzüglich Teilumdrehungen eine Auszugslänge an Sicherheitsnetz 12 bereitsteht, damit das Sicherheitsnetz 12 ohne Schwierigkeiten in die Aufnahmetaschen 24 eingehängt werden kann.

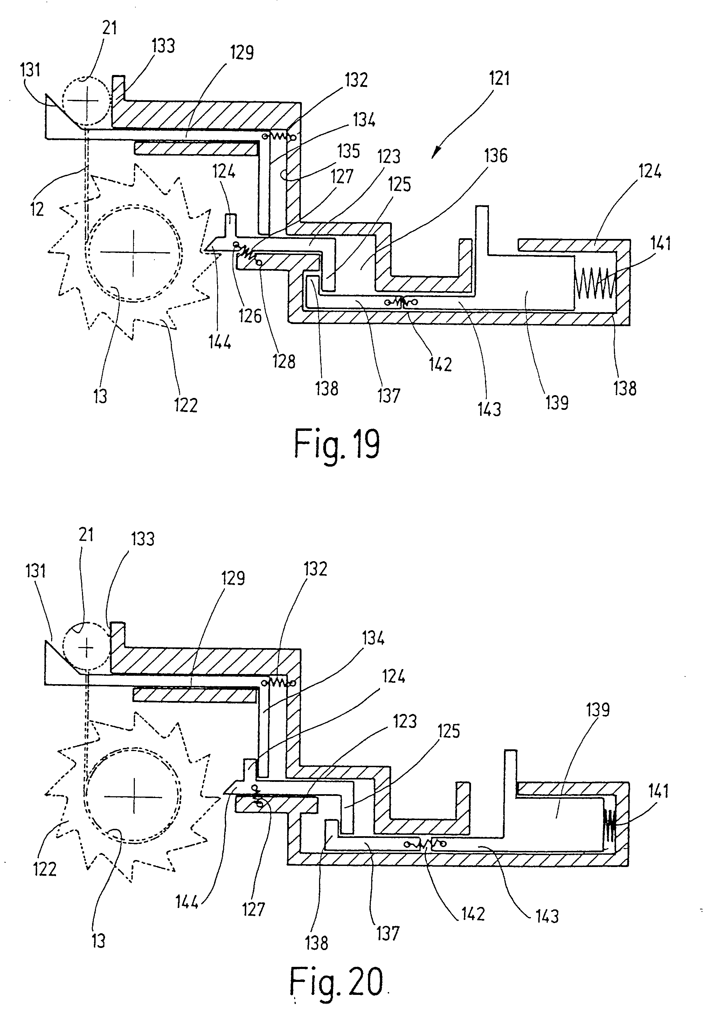

Die Fig. 19 bis 23 zeigen in stark schematisierter, mehr prinzipieller Darstellung eine Halteeinrichtung 25, die unmittelbar mit der Wickelwelle 13 zusammenwirkt und durch eine beschleunigungsabhängige Einrichtung 121 ausgelöst wird. An der Wickelwelle 13 ist, wie vorher, das Sicherheitsnetz 12 mit einer Kante verbunden, deren anderen andere Kante an der Zugstange 21 befestigt ist.

Als ortsfestes Halteglied dient ein Sperrklinkenrad 122, das in bekannter Weise sägezahnförmige Zähne trägt und drehfest mit der Wickelwelle 13 gekuppelt ist. Das bewegliche Halteglied stellt ein Sperrklinkenschieber 123 dar.

Im Einzelnen ist der Aufbau wie folgt:

In einem schematisch angedeuteten Gehäuse 124 ist in einer entsprechenden Führung der Sperrklinkenschieber 123 verschieblich gelagert, so dass er radial auf das Sperrklinkenrad 122 zu- bzw. von diesem wegbewegbar ist. Der Sperrklinkenschieber 123 weist an seiner Oberseite einen ersten Mitnehmer 125 und an seinem rückwärtigen Ende einen zweiten Mitnehmer 125 auf. Die beiden Mitnehmer 125, 125 sind rechtwinklig von dem Schieber 123 wegstehende Fortsätze oder Arme.

Etwa unterhalb des Mitnehmers 125 greift in einer Bohrung 126 eine Druckfeder 127 an, deren anderes Ende bei 128 in dem Gehäuse verankert ist. Die Lage des Verankerungspunktes 128 ist so gewählt, dass die Druckfeder 127 als Schnappfeder für den Sperrklinkenschieber 123 wirken kann.

Oberhalb des Sperrklinkenschiebers 123 befindet sich ein Fühlschieber 129, der in Richtung parallel zu dem Sperrklinkenschieber 123 in dem Gehäuse 124 längsgeführt ist. Der Fühlschieber 129 wirkt über eine Schrägfläche 131 an seinem linken Ende mit der Zugstange 21 zusammen und er mittels einer Zugfeder 132, die an seinem hinteren Ende angreift und ihr Widerlager in dem Gehäuse 124 findet, in eine Stellung vorgespannt, in der die Schrägfläche 131 einer gehäusefesten Anschlagfläche 133 möglichst dicht benachbart ist. In dieser Stellung liegt ein von dem Fühlschieber 129 nach unten sich erstreckender Arm 134 an einer Gehäusewand 135 an. Die Länge des Arms 134 ist so bemessen, dass das freie Ende des Arms 134 mit dem Mitnehmer 124 in Berührung kommen kann.

In einem Innenraum 136 des Gehäuses 124, in dem sich auch der Mitnehmer 125 bewegt, ist ein hakenförmiger Mitnehmerschieber 137 verschieblich gelagert. Der Mitnehmerschieber 137 weist einen nach oben zeigenden Arm 138 auf, der dazu vorgesehen ist, mit dem Mitnehmer 125 in Eingriff zu kommen.

In Bewegungsrichtung hinter dem Mitnehmerschieber 137 befindet sich eine in einer Kammer 138 des Gehäuses 124 geführte Masse 139, die durch eine Druckfeder 141 in Richtung auf die Wickelwelle 13 zu vorgespannt ist.

Die kinematische Verbindung zwischen der Masse 139 und dem Mitnehmerschieber 137 stellt eine Koppelfeder 142 her, die an dem von dem Arm 138 abliegenden Ende des Mitnehmerschiebers 137 und an einem Arm 143 befestigt ist, der von der Masse 139 ausgeht und in Richtung auf den Mitnehmerschieber 137 ragt.

Die Anordnung nach Fig. 19 arbeitet folgendermaßen:

Zunächst sei eine Betriebsstellung angenommen, wie sie in Fig. 19 gezeigt ist. Das Sicherheitsnetz 12 ist vollständig auf die Wickelwelle 13 aufgewickelt, so dass die Zugstange 21 in den keilförmigen Raum zwischen der Schrägfläche 131 und der Gehäuseanschlagfläche 133 eingedrungen ist. Hierdurch ist der Fühlschieber 129 in seine nach links gerichtete Endlage verschoben, in der die Zugfeder 132 maximal gespannt ist. Gleichzeitig ist die Druckfeder 127 in Richtung auf die Wickelwelle 13 umgeschnappt und drückt eine Rastnase 144 des Sperrklinkenschiebers 123 in die Zahnlücken des Sperrklinkenrades 122.

Die Masse 139 ist ebenfalls durch die Druckfeder 141 in die linke Endlage gebracht.

Wenn das mit dieser Anordnung ausgerüstete Fahrzeug sich, bezogen auf die Darstellungen, nach links zu bewegen beginnt, bewirkt die Trägheit der Masse 139, dass sich diese gegen die Wirkung der Druckfeder 141 in der Kammer 138 in die rechte Endlage bewegt, wie dies Fig. 20 zeigt. Dadurch wird über die Koppelfeder 142 auch der Mitnehmerschieber 137 relativ zu dem Gehäuse 124 nach rechts gezogen. Diese nach rechts gerichtete Bewegung wird von dem Arm 138 auf den Arm 125 übertragen, womit der Sperrklinkenschieber 123 ebenfalls so weit zurückgezogen wird, bis sein Mitnehmer 124 an dem Arm 134 zur Anlage kommt. Dieser Arm 134 kann sich nicht aus der linken Endlage herausbewegen, weil die Zugstange 21 zwischen der Schrägfläche 131 und der Anschlagfläche 133 eingeklemmt ist. Der Fühlschieber 129 wird also seine linke Endlage beibehalten, weshalb der Sperrklinkenschieber 123 lediglich bis in die Lage entsprechend Fig. 20 zurückgezogen werden kann. Diese nach rechts gerichtete Verschiebung des Sperrklinkenschiebers 123 genügt nicht, um die Druckfeder 127 umspringen zu lassen. Beim Verschwinden der Beschleunigungskraft wird sich folglich der Sperrklinkenschieber 123 wieder in die Lage nach Fig. 19 bewegen, wenn die ihn zurückziehende Kraft, die von dem Mitnehmerschieber 137 ausgeübt wird, aufhört, auf ihn einzuwirken.

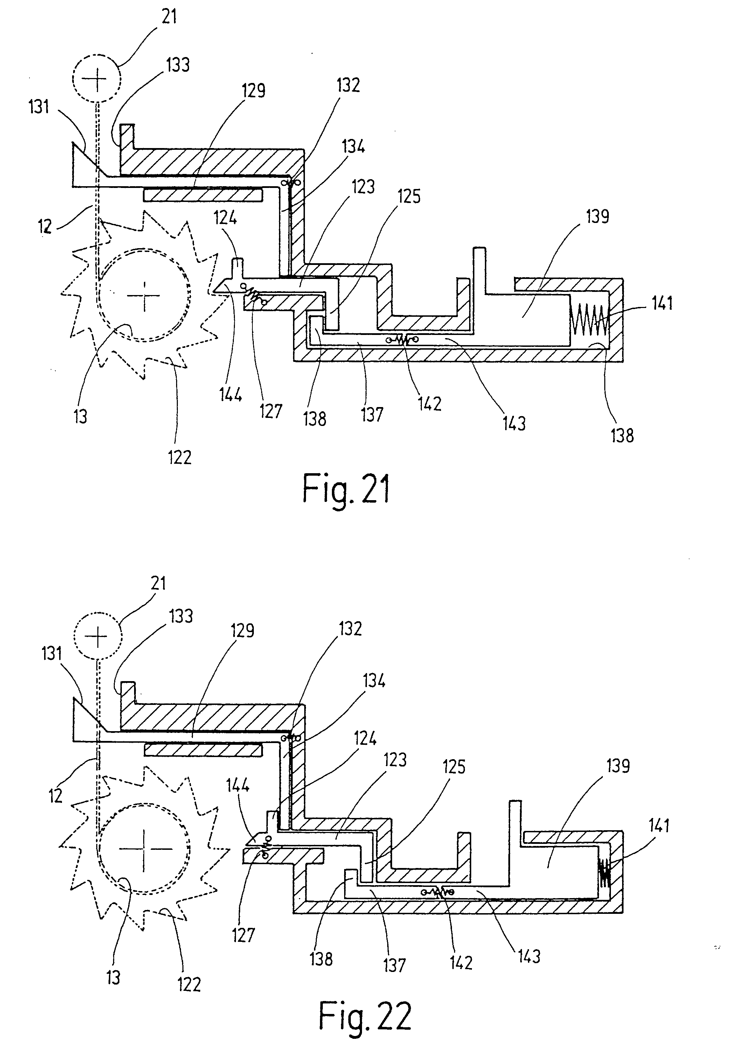

Der Benutzer kann zum Aufspannen des Sicherheitsnetzes 12 die Zugstange 21 erfassen und nach oben in Richtung auf die Aufnahmetaschen 24 bewegen. Hierdurch kommt der Fühlschieber 129 frei und kann sich infolge der Wirkung der Zugfeder 132 in seine rechte Endlage begeben, siehe Fig. 21. Gleichzeitig wird durch das Herausziehen des Sicherheitsnetzes 12 die Wickelwelle 13 im Uhrzeigersinne in Umdrehungen versetzt. Dabei ratschen die flachen Zahnflanken des Sperrklinkenrades 122 an der Sperrnase 144 des Sperrklinkenschiebers 123 vorbei und drücken ihn periodisch gegen die Wirkung der Druckfeder 127 nach rechts. Da die Verschiebung den Umschlagpunkt der Druckfeder 127 nicht überschreitet, springt in jeder Zahnlücke der Sperrklinkenschieber 123 wieder nach links in die Zahnlücken hinein.

Wenn der Benutzer genügend Sicherheitsnetz herausgezogen hat und die Spannung am Sicherheitsnetz nachlässt, ist der Federmotor 14 bestrebt, die Wickelwelle 13 wieder im Sinne des Aufwickelns zu bewegen. Er wird jedoch hieran an dem Zusammenwirken des Sperrklinkenrades 122 mit der Sperrnase 144 gehindert, weil sich die steile Zahnflankenfläche an der Sperrnase 144 anlegt und diesen nicht zurückdrücken kann, siehe Fig. 21.

Der Benutzer ist jetzt in der Lage, ohne Kraftaufwendung die Verankerungsglieder 23 in die Aufnahmetaschen 24 einzuhängen.

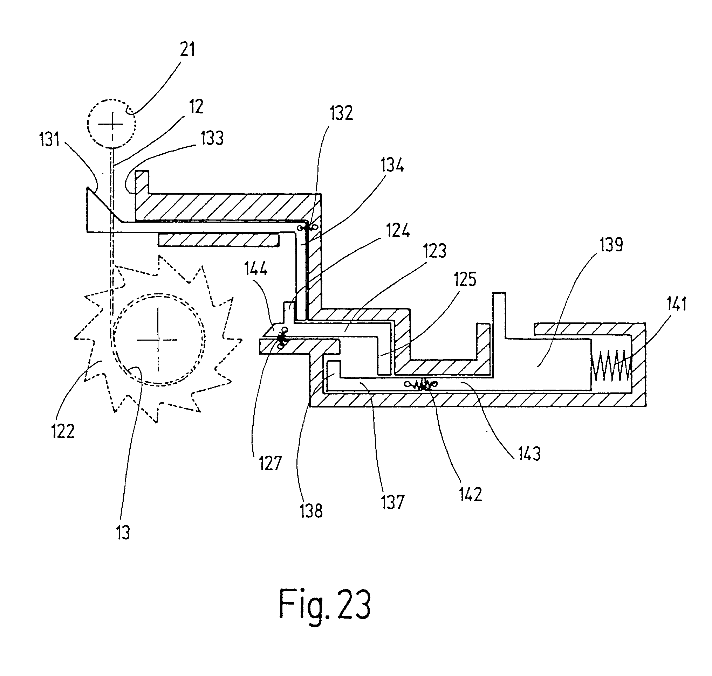

Wenn nach dem Einhängen des Sicherheitsnetzes 12 das Fahrzeug das erste Mal angefahren wird, wiederholt sich der oben bereits erläuterte Vorgang. Die Trägheit der Masse 139 verschiebt die Masse 139 relativ zu dem Gehäuse 124 nach rechts gegen die Wirkung der Druckfeder 141, wie in Fig. 22 gezeigt. Diese Bewegung wird wiederum über die Koppelfeder 142 auf den Mitnehmerschieber 137 übertragen, der für das Zusammenwirken des Arms 138 mit dem Arm 125 den Sperrklinkenschieber 123 nach rechts zieht. Da sich jedoch diesmal der Fühlschieber 129 in seiner rechten Endlage befindet, wird die Bewegung des Sperrklinkenschiebers 123 nicht wie vorher beschrieben aufgehalten, sondern kann sich weiter nach rechts fortsetzen, wobei der Umsprungpunkt der Druckfeder 127 überschritten wird. Nachdem dieser Punkt überschritten ist, wirkt die Druckfeder 127 nicht mehr nach links in Richtung auf das Sperrklinkenrad 122, sondern nach rechts in dem Sinne, dass sie den Sperrklinkenschieber 123 außer Eingriff mit dem Sperrklinkenrad 122 hält, auch wenn anschließend die Masse 139 in die Lage nach Fig. 23 zurückkehrt. Die von dem Federmotor 14 aufgebrachte Kraft wird dadurch frei und kann die Wickelwelle 13 im Sinne eines Aufwickelns und damit Spannens des Sicherheitsnetzes 12 in Umdrehungen versetzen.

Wenn der Benutzer das Sicherheitsnetz einfahren will, genügt es, die Zugstange 21 auszuhängen und das Sicherheitsnetz 12 zurücklaufen zu lassen. Am Ende der Einfahrbewegung kommt die Zugstange 21 wieder in den keilförmigen Raum zwischen der Schrägfläche 131 und dem Anschlag 133 und drückt den Fühlschieber 129 zurück in seine linke Endlage. Bei dieser Bewegung nimmt der Fühlschieber 129 den Sperrklinkenschieber 123 nach links über den Umschlagpunkt der Druckfeder 127 mit, womit die Ausgangsstellung nach Fig. 19 erreicht ist.

Eine Sicherheitsnetzanordnung weist ein Gehäuse auf, in dem eine Wickelwelle drehbar gelagert ist. Mit Hilfe eines Federmotors wird die Wickelwelle im Aufwickelsinne eines an der Wickelwelle befestigten Sicherheitsnetzes vorgespannt. Die andere Kante des Sicherheitsnetzes ist mit einer Zugstange verbunden, die in Aufnahmetaschen in der Karosserie einzuhängen ist.

Damit das Einhängen für den Benutzer möglichst kraftarm erfolgt, ist eine Halteeinrichtung vorgesehen, die bei einem Zurücklaufen des Sicherheitsnetzes in das Gehäuse zumindest einen Teil der Rückzugskraft aufnimmt, sobald das Sicherheitsnetz so weit aus dem Gehäuse herausgezogen ist, bis die Zugstange in die Aufnahmetaschen einhängbar ist. Die Halteeinrichtung kann willkürlich entriegelt werden, um das erneute Verstauen des Sicherheitsnetzes in dem Gehäuse zu ermöglichen.

## Patentansprüche

1. Sicherheitsnetzanordnung (9) für Kraftfahrzeuge, insbesondere für Kombi-PKW, um bei einem Auffahrunfall Gegenstände aus einem Koffer- oder Gepäckraum daran zu hindern, in den Fahrgastraum geschleudert zu werden,
mit einem Gehäuse (11), das einen parallel zu der Länge des Gehäuses (11) sich erstreckenden Auslaufschlitz (18) aufweist,
mit einer in dem Gehäuse (11) drehbar gelagerten Wickelwelle (13),
mit einem Sicherheitsnetz (12), das zwei voneinander beabstandete Längskanten aufweist, von denen eine an der Wickelwelle (13) befestigt ist und die andere mit einem Zugstab (21) verbunden ist, das durch den Auslaufschlitz (18) verläuft, und das durch den Benutzer in wenigstens eine Auszugsposition zu bringen ist, in der es eine vorgegebene Auszugslänge weit aus dem Gehäuse (11) ausgezogen ist,
mit einer der Wickelwelle (13) zugeordneten Antriebseinrichtung (14), um die Wickelwelle (13) im Sinne eines Aufwickelns des Sicherheitsnetzes (12) vorzuspannen und dadurch eine Rückzugskraft für das Sicherheitsnetz (12) zu erzeugen,
mit in dem Fahrzeug angebrachten Aufnahmetaschen (24) für den Zugstab (21) und
mit wenigstens einer Halteeinrichtung (25), die dazu eingerichtet ist, an der Auszugsposition des Sicherheitsnetzes (12) wirksam zu werden und an der Auszugsposition zumindest einen Teil der Rückzugskraft der Antriebseinrichtung (14) aufzunehmen .

2. Sicherheitsnetzanordnung nach Anspruch 1, **dadurch gekennzeichnet, dass** die wenigstens eine Auszugsposition einer Teilauszugslänge entspricht, in der das Sicherheitsnetz (12) lediglich ein Stück seiner gesamten möglichen Auszugslänge ausgezogen ist.

3. Sicherheitsnetzanordnung nach Anspruch 1, **dadurch gekennzeichnet, dass** die wenigstens eine Auszugsposition einer Auszugslänge entspricht, in der das Sicherheitsnetz (12) lediglich nahezu seine gesamte mögliche Auszugslänge weit ausgezogen ist.

4. Sicherheitsnetzanordnung nach Anspruch 1, **dadurch gekennzeichnet, dass** die Halteeinrichtung (25) derart gestaltet ist, dass sie die Rückzugskraft vollständig aufnimmt.

5. Sicherheitsnetzanordnung nach Anspruch 1, **dadurch gekennzeichnet, dass** die Halteeinrichtung (25) zwei Zustände aufweist, einen ersten, in der sie die Rückzugskraft aufnimmt, und einen zweiten, in der sie die Rückzugskraft nicht aufnimmt.

6. Sicherheitsnetzanordnung nach Anspruch 5, **dadurch gekennzeichnet, dass** der Halteinrichtung eine Auslöseeinrichtung (71,81,114,121) zugeordnet ist, die dazu eingerichtet ist, die Halteeinrichtung (25) aus dem ersten in den zweiten Zustand zu überführen.

7. Sicherheitsnetzanordnung nach Anspruch 6, **dadurch gekennzeichnet, dass** die Auslöseeinrichtung (71) durch ein Zeitglied (71) gebildet ist.

8. Sicherheitsnetzanordnung nach Anspruch 6, **dadurch gekennzeichnet, dass** die Auslöseeinrichtung (114) zur manuellen Betätigung eingerichtet ist.

9. Sicherheitsnetzanordnung nach Anspruch 1, **dadurch gekennzeichnet, dass** die Halteeinrichtung (25) dazu eingerichtet ist, dem Benutzer zumindest zu signalisieren, dass das Sicherheitsnetz (12) zum Einhängen des Zugstabs (21) in die Aufnahmetaschen (24) ausreichend weit ausgezogen ist.

10. Sicherheitsnetzanordnung nach Anspruch 1, **dadurch gekennzeichnet, dass** die Halteeinrichtung (25) dazu eingerichtet ist, zu verhindern, dass das Sicherheitsnetz (12) über eine vorgegebene Auszugslänge hinaus ausziehbar ist.

11. Sicherheitsnetzanordnung nach Anspruch 1, **dadurch gekennzeichnet, dass** die Halteeinrichtung (25) an dem Zugstab (21) angreift.

12. Sicherheitsnetzanordnung nach Anspruch 1, **dadurch gekennzeichnet, dass** die Halteeinrichtung (25) an der Wickelwelle (13) angreift.

13. Sicherheitsnetzanordnung nach Anspruch 1, **dadurch gekennzeichnet, dass** die Halteeinrichtung (25) an dem Sicherheitsnetz (13) angreift.

14. Sicherheitsnetzanordnung nach Anspruch 1, **dadurch gekennzeichnet, dass** die Halteeinrichtung (25) kraftschlüssig zusammenwirkende überwindbare Rastmittel (45,46;86,113) aufweist, die derart gestaltet sind, dass sie ein weiteres Ausziehen des Sicherheitsnetzes (12) über diejenige Auszugslänge, bei der das Sicherheitsnetz (12) zum Einhängen - des Zugstabs (21) in die Aufnahmetaschen (24) ausreichend weit ausgezogen ist, nicht verhindern.

15. Sicherheitsnetzanordnung nach Anspruch 1, **dadurch gekennzeichnet, dass** die Halteeinrichtung (25) formschlüssig zusammenwirkende Fangmittel (26,27;86,113) aufweist, die derart gestaltet sind, dass sie ein weiters Ausziehen des Sicherheitsnetzes (12) über diejenige Auszugslänge, bei der das Sicherheitsnetz (12) zum Einhängen des Zugstabs (21) in die Aufnahmetaschen (24) ausreichend weit ausgezogen ist, sperren.

16. Sicherheitsnetzanordnung nach Anspruch 1, **dadurch gekennzeichnet, dass** zu der Halteeinrichtung (25) wenigstens ein mit dem Sicherheitsnetz (12) mittelbar oder unmittelbar verbundenes bewegliches Haltemittel (42,86) und an dem Gehäuse (11) angebrachte stationäre Haltemittel (41,56,72) gehören.

17. Sicherheitsnetzanordnung nach Anspruch 16, **dadurch gekennzeichnet, dass** das an dem Sicherheitsnetz (12) vorgesehene Haltemittel (42) von einer parallel und im Abstand von der Zugstange (21) an dem Sicherheitsnetz (12) befestigten Stange (43) gebildet ist, von der wenigstens eines ihrer Enden (42) seitlich über das Sicherheitsnetz (12) übersteht.

18. Sicherheitsnetzanordnung nach Anspruch 16, **dadurch gekennzeichnet, dass** das stationäre Haltemittel (56) eine an ihren beiden Enden offene Nut (59) aufweist.

19. Sicherheitsnetzanordnung nach Anspruch 18, **dadurch gekennzeichnet, dass** die Nut (59) in Richtung auf das Sicherheitsnetz (12) zu offen ist.

20. Sicherheitsnetzanordnung nach Anspruch 18, **dadurch gekennzeichnet, dass** die Nut (59) aufeinander zu bewegliche und aufeinander zu federvorgespannte Nutenwände (61,62) aufweist.

21. Sicherheitsnetzanordnung nach Anspruch 18, **dadurch gekennzeichnet, dass** an der Nut (59) wenigstens ein in die Nut (59) vorspringender Vorsprung (64) vorhanden ist, der dazu eingerichtet ist, in der Raststellung mit dem an dem Sicherheitsnetz (12) befindlichen Rastglied (42,57) zusammenzuwirken.

22. Sicherheitsnetzanordnung nach Anspruch 18, **dadurch gekennzeichnet, dass** in der Nut (59) wenigstens eine Rastausnehmung vorhanden ist, die dazu eingerichtet ist, in der Raststellung mit einem Vorsprung des an dem Sicherheitsnetz (12) befindlichen Rastglieds zusammenzuwirken.

23. Sicherheitsnetzanordnung nach Anspruch 16, **dadurch gekennzeichnet, dass** das stationäre Haltemittel (41,56) einen biegsamen Stiel (45,58) aufweist, der an dem Gehäuse (11) befestigt ist.

24. Sicherheitsnetzanordnung nach Anspruch 16, **dadurch gekennzeichnet, dass** die Halteeinrichtung (25) derart gestaltet ist, dass die Rastkraft der miteinander zusammenwirkenden Haltemittel (42,59) in einer Bewegungsrichtung des Sicherheitsnetzes (12) anders ist als in der anderen Bewegungsrichtung des Sicherheitsnetzes (12).

25. Sicherheitsnetzanordnung nach Anspruch 16, **dadurch gekennzeichnet, dass** das stationäre Haltemittel (41) die Gestalt eines in Richtung auf das Gehäuse (11) zu offenen Hakens (59) hat, der einen vor der Hakenöffnung befindlichen Vorsprung (48) aufweist.

26. Sicherheitsnetzanordnung nach Anspruch 16, **dadurch gekennzeichnet, dass** das stationäre Haltemittel ein schwenkbares Verriegelungsglied (72) umfasst, das in dem Gehäuse (11) neben der Wickelwelle (13) schwenkbar gelagert ist und einen Mitnehmer (78) trägt, der mit einer an dem Sicherheitsnetz (12) befestigten Strebe (43) zusammenwirkt, und dass das Verriegelungsglied (72) zwei Betriebsstellungen aufweist, wobei es in der einen Stellung ein Rücklaufen des Sicherheitsnetzes (12) im Zusammenwirken mit der Strebe (43) blockiert und in der anderen Stellung die mit dem Sicherheitsnetz (12) verbundene Strebe (43) passieren lässt.

27. Sicherheitsnetzanordnung nach den Ansprüchen 26 und 7, **dadurch gekennzeichnet, dass** das Zeitglied (71) von einer Viskosebremse gebildet ist, die mit dem schwenkbaren Verriegelungsglied (72) über einen Freilauf (76,77) gekuppelt ist, derart, dass beim Herausziehen des Sicherheitsnetzes (12) die Viskosebremse (71) unwirksam ist.

28. Sicherheitsnetzanordnung nach Anspruch 1, **dadurch gekennzeichnet, dass** die Halteeinrichtung (25) wenigstens ein Distanzelement (26) aufweist, das einends an dem Gehäuse (11) befestigt und anderenends mit dem Zugstab (21) verbunden ist.

29. Sicherheitsnetzanordnung nach Anspruch 28, **dadurch gekennzeichnet, dass** das Distanzelement (26) an dem Gehäuse (11) angelenkt und um Schwenkachsen (28) bewegbar ist, von denen die eine zu der Achse der Wickelwelle (13) parallel und die andere zu der Achse der Wickelwelle (13) rechtwinklig ist.

30. Sicherheitsnetzanordnung nach Anspruch 28, **dadurch gekennzeichnet, dass** der Zugstab (21) eine Gleitführung (29) enthält, in der das von dem Gehäuse (11) abliegende Ende des Distanzelements (26) geführt ist.

31. Sicherheitsnetzanordnung nach Anspruch 28, **dadurch gekennzeichnet, dass** der Zugstab (21) mit einer willkürlich lösbaren Rasteinrichtung (32) versehen ist, die zwei Zustände aufweist, wobei in dem einen Zustand das Distanzelement (26) die Rasteinrichtung (32) in seinen beiden Bewegungsrichtungen in dem Zugstab (21) frei passieren kann und in dem anderen Zustand das Distanzelement (26) die Rasteinrichtung (32) lediglich in einer Bewegungsrichtung passieren kann, derart, dass durch ein Anlaufen des Distanzelements (26) an die Rasteinrichtung (32) der Zugstab (21) im Abstand von dem Gehäuse (11) gehalten wird.

32. Sicherheitsnetzanordnung nach Anspruch 28, **dadurch gekennzeichnet, dass** zwei gleiche, gegensinnig schwenkbare Distanzelemente (26) vorgesehen sind.

33. Sicherheitsnetzanordnung nach Anspruch 1, **dadurch gekennzeichnet, dass** karosserieseitig Aufnahmetaschen (24) für die Enden des Zugstabs (21) vorgesehen sind und dass jede Aufnahmetasche (24) mit einem Einlauftrichter versehen ist, der derart gestaltet ist, dass beim Einführen der Enden des Zugstabs (21) beim Hochschwenken des Sicherheitsnetzes (12) der Zugstab (21) zumindest nicht in Richtung auf das Gehäuse (11) zu bewegt wird.

34. Sicherheitsnetzanordnung nach Anspruch 1, **dadurch gekennzeichnet, dass** die Halteeinrichtung (25) eine Zähleinrichtung zum Zählen der Anzahl der Umdrehungen der Wickelwelle (13) aufweist.

35. Sicherheitsnetzanordnung nach Anspruch 16, **dadurch gekennzeichnet, dass** das stationäre Haltemittel (85,95) von einer spiralig gewundenen Nut (95) gebildet ist, die koaxial zu der Achse der Wickelwelle (13) angeordnet ist und in der ein Folgeglied (86) läuft, das mit der Wickelwelle (13) gekuppelt ist.

36. Sicherheitsnetzanordnung nach Anspruch 35, **dadurch gekennzeichnet, dass** die Nut (95) eine mit dem Folgeglied (86) zusammenwirkende Rastvertiefung (113) aufweist.

37. Sicherheitsnetzanordnung nach Anspruch 36, **dadurch gekennzeichnet, dass** die Rastvertiefung (113) in einer Seitenwand (92) der Nut (95) angeordnet ist.

38. Sicherheitsnetzanordnung nach Anspruch 35, **dadurch gekennzeichnet, dass** das Folgeglied (86) auf einem Schieber (97) sitzt, der radial bezüglich der Wickelwelle (13) verschiebbar ist.

39. Sicherheitsnetzanordnung nach Anspruch 35, **dadurch gekennzeichnet, dass** die Nut (95) an ihrem radial inneren Ende in eine zumindest angenähert zylindrische Kreisbahn (96) übergeht.

40. Sicherheitsnetzanordnung nach Anspruch 35, **dadurch gekennzeichnet, dass** die Nut (95) an ihrem radial außen liegenden Ende in eine Kreisbahn (87) übergeht.

41. Sicherheitsnetzanordnung nach Anspruch 35, **dadurch gekennzeichnet, dass** die Nut (95) an ihrem radial außen liegenden Ende (93) mit einem Weichenglied (112) versehen ist, das in einer Richtung den Durchgang des Folgegliedes (86) durch die Kreisbahn freigibt und in der entgegengesetzten Bewegungsrichtung das Folgeglied (86) in die spiralig verlaufende Nut (95) einfädelt.

42. Sicherheitsnetzanordnung nach Anspruch 35, **dadurch gekennzeichnet, dass** an dem Gehäuse (11) ein Auslöseglied (114) sitzt, das dazu eingerichtet ist, mit dem Folgeglied (86) zusammenzuwirken.

43. Sicherheitsnetzanordnung nach Anspruch 6, **dadurch gekennzeichnet, dass** die Auslöseeinrichtung (121) durch eine beschleunigungsgesteuerte Einrichtung gebildet ist, die auf ein Anfahren und/oder Bremsen des Fahrzeugs anspricht.

44. Sicherheitsnetzanordnung nach Anspruch 1, **dadurch gekennzeichnet, dass** zu der Halteeinrichtung (25) ein drehfest mit der Wickelwelle (13) gekuppeltes Klinkenrad (122) als ortsfestes Halteglied sowie eine Sperrklinke (123) als bewegliches Halteglied gehören.

45. Sicherheitsnetzanordnung nach den Ansprüchen 43 und 44, **dadurch gekennzeichnet, dass** die Auslöseeinrichtung (121) mit der Sperrklinke (123) zusammenwirkt.

## Claims

1. Safety net arrangement (9) for motor vehicles, in particular for an estate car, to prevent articles from being flung into the passenger compartment from a luggage area in the case of a rear end collision,
with a housing (11), which has a run-out slot (18) extending parallel to the length of the housing (11),
with a winding shaft (13) rotatably disposed in the housing (11),
with a safety net (12), which has two longitudinal edges spaced apart from one another, one of which being fastened to the winding shaft (13) and the other being connected to a pull rod (21), and said safety net runs through the run-out slot (18) and can be moved by the user into at least one pull-out position, in which it is extended from the housing (11) to a predetermined pull-out length,
with a drive means (14) allocated to the winding shaft (13) to prestress the winding shaft (13) in the sense of winding up the safety net (12) and thus generate a retraction force for the safety net (12),
with receiving pockets (24) attached in the vehicle for the pull rod (21), and
with at least one holding means (25), which is arranged to be active at the pull-out position of the safety net (12) and absorb at least a portion of the retraction force of the drive means (14) at the pull-out position.

2. Safety net arrangement according to Claim 1, **characterised in that** the at least one pull-out position corresponds to a partial pull-out length, in which the safety net (12) is pulled out only to a portion of its entire possible pull-out length.

3. Safety net arrangement according to Claim 1, **characterised in that** the at least one pull-out position corresponds to a partial pull-out length, in which the safety net (12) is pulled out only to virtually its entire possible pull-out length.

4. Safety net arrangement according to Claim 1, **characterised in that** the holding means (25) is configured such that it fully absorbs the retraction force.

5. Safety net arrangement according to Claim 1, **characterised in that** the holding means (25) has two statuses, a first in which it absorbs the retraction force, and a second in which it does not absorb the retraction force.

6. Safety net arrangement according to Claim 5, **characterised in that** the holding means has an associated release means (71, 81, 114, 121), which is fitted to move the holding means (25) out of the first status into the second.

7. Safety net arrangement according to Claim 6, **characterised in that** the release means (71) is formed by a time function element (71).

8. Safety net arrangement according to Claim 6, **characterised in that** the release means (114) is fitted for manual operation.

9. Safety net arrangement according to Claim 1, **characterised in that** the holding means (25) is fitted to at least indicate to the user that the safety net (12) has been pulled out to a sufficient distance to latch the pull rod (21) into the receiving pockets (24).

10. Safety net arrangement according to Claim 1, **characterised in that** the holding means (25) is fitted to prevent the safety net (12) from being pulled out beyond a predetermined pull-out length.

11. Safety net arrangement according to Claim 1, **characterised in that** the holding means (25) engages on the pull rod (21).

12. Safety net arrangement according to Claim 1, **characterised in that** the holding means (25) engages on the winding shaft (13).

13. Safety net arrangement according to Claim 1, **characterised in that** the holding means (25) engages on the safety net (12).

14. Safety net arrangement according to Claim 1, **characterised in that** the holding means (25) has non-positively cooperating catch elements (45, 46; 86, 113), which may be overstepped and which are configured in such a way that they do not prevent the safety net (12) from being pulled out further beyond the pull-out length at which the safety net (12) is pulled out to a sufficient distance for the pull rod (21) to be latched into the receiving pockets (24).

15. Safety net arrangement according to Claim 1, **characterised in that** the holding means (25) has positively cooperating gripping elements (26, 27; 86, 113), which are configured such that they block the safety net (12) from being pulled out further beyond the pull-out length at which the safety net (12) is pulled out to a sufficient distance for the pull rod (21) to be latched into the receiving pockets (24).

16. Safety net arrangement according to Claim 1, **characterised in that** the holding means (25) include at least one moveable holding element (42, 86) directly or indirectly connected to the safety net (12) and fixed holding elements (41, 56, 72) attached to the housing (11).

17. Safety net arrangement according to Claim 16, **characterised in that** the holding element (42) provided on the safety net (12) is formed by a rod (43), which is fastened to the safety net (12) parallel to and at a distance from the pull rod (21), and at least one of the ends (42) of said rod protrudes laterally above the safety net (12).

18. Safety net arrangement according to Claim 16, **characterised in that** the fixed holding element (56) has a groove (59) open at its two ends.

19. Safety net arrangement according to Claim 18, **characterised in that** the groove (59) is open towards the safety net (12).

20. Safety net arrangement according to Claim 18, **characterised in that** the groove (59) has groove walls (61, 62) which are moveable towards one another and resiliently prestressed towards one another.

21. Safety net arrangement according to Claim 18, **characterised in that** on the groove (59) there is at least one projection (64) protruding into the groove (59), which is configured to cooperate with catch member (42, 57) located on the safety net (12) in the engaged position.

22. Safety net arrangement according to Claim 18, **characterised in that** on the groove (59) there is at least one catch recess, which is configured to cooperate with a projection of the catch member located on the safety net (12) in the engaged position.

23. Safety net arrangement according to Claim 16, **characterised in that** the fixed holding element (41, 56) has a flexible stem (45, 58), which is fastened to the housing (11).

24. Safety net arrangement according to Claim 16, **characterised in that** the holding means (25) is configured such that the latching force of interacting holding elements (42, 59) in one direction of movement of the safety net (12) is different from that in the other direction of movement of the safety net (12).

25. Safety net arrangement according to Claim 16, **characterised in that** the fixed holding element (41) has the form of a hook (59) open towards the housing (11) which has a projection (48) located in front of the hook opening.

26. Safety net arrangement according to Claim 16, **characterised in that** the fixed holding element comprises a pivoting locking element (72), which is disposed to pivot in the housing (11) next to the winding shaft (13) and bears an entrainment means (78), which cooperates with a strut (43) fastened to the safety net (12), and that the locking element (72) has two operating positions, wherein in one position it blocks a return movement of the safety net (12) in cooperation with the strut (43) and in the other position it allows the strut (43) connected to the safety net (12) to pass.

27. Safety net arrangement according to Claims 26 and 7, **characterised in that** the time function element (71) is formed by a viscose brake, which is coupled to the pivoting locking element (72) via a free-running means (76, 77) in such a manner that the viscose brake (71) is inactive when the safety net (12) is being pulled out.

28. Safety net arrangement according to Claim 1, **characterised in that** the holding means (25) has at least one spacer element (26), which is fastened to the housing (11) at one end and connected to the pull rod (21) at the other end.

29. Safety net arrangement according to Claim 28, **characterised in that** the spacer element (26) is pivoted on the housing (11) and is moveable around pivot axes (28), of which one is parallel to the axis of the winding shaft (13) and the other is perpendicular to the axis of the winding shaft (13).

30. Safety net arrangement according to Claim 28, **characterised in that** the pull rod (21) contains a slideway (29), in which the end of the spacer element (26) remote from the housing (11) is guided.

31. Safety net arrangement according to Claim 28, **characterised in that** the pull rod (21) is provided with a catch means (32), which can be released voluntarily and which has two statuses, wherein in one status the spacer element (26) can freely pass the catch means (32) in its two directions of movement in the pull rod (21) and in the other status the spacer element (26) can only pass the catch means (32) in one direction of movement, such that the pull rod (21) is held at a distance from the housing (11) as a result of the spacer element (26) running onto the catch means (32).

32. Safety net arrangement according to Claim 28, **characterised in that** two like spacer elements (26) which can be pivoted in opposite directions are provided.

33. Safety net arrangement according to Claim 1, **characterised in that** receiving pockets (24) are provided on the car body side for the ends of the pull rod (21), and that each receiving pocket (24) is provided with a feed funnel, which is configured such that on insertion of the ends of the pull rod (21) when the safety net (12) is pivoted up, the pull rod (21) is at least not moved towards the housing (11).

34. Safety net arrangement according to Claim 1, **characterised in that** the holding means (25) has a counting means for counting the number of rotations of the winding shaft (13).

35. Safety net arrangement according to Claim 16, **characterised in that** the fixed holding element (85, 95) is formed from a spiral-wound groove (95), which is arranged coaxially to the axis of the winding shaft (13) and runs in one follower element (86) which is coupled to the winding shaft (13).

36. Safety net arrangement according to Claim 35, **characterised in that** the groove (95) has a catch recess (113) cooperating with the follower element (86).

37. Safety net arrangement according to Claim 36, **characterised in that** the catch recess (113) is arranged in a side wall (92) of the groove (95).

38. Safety net arrangement according to Claim 35, **characterised in that** the follower element (86) sits on a slide (97), which is radially displaceable with respect to the winding shaft (13).

39. Safety net arrangement according to Claim 35, **characterised in that** the groove (95) merges into an at least approximately cylindrical circular path (96) at its radially inner end.

40. Safety net arrangement according to Claim 35, **characterised in that** the groove (95) merges into a circular path (87) at its radially outer end.

41. Safety net arrangement according to Claim 35, **characterised in that** at its radially outer end (93), the groove (95) is provided with a switch member (112), which in one direction frees the passage of the follower element (86) through the circular path and in the opposite direction of movement feeds the follower element (86) into the spiral-wound groove (95).

42. Safety net arrangement according to Claim 35, **characterised in that** a release element (114) sits on the housing (11) which is fitted to cooperate with the follower element (86).

43. Safety net arrangement according to Claim 6, **characterised in that** the release means (121) is formed by an acceleration-controlled means, which responds to start-up and/or braking of the vehicle.

44. Safety net arrangement according to Claim 1, **characterised in that** the holding means (25) includes a ratchet wheel (122) coupled to the winding shaft (13) in a manner fixed against rotation as a fixed holding element and a ratchet (123) as a moveable holding element.

45. Safety net arrangement according to Claims 43 and 44, **characterised in that** the release means (121) cooperates with the ratchet (123).

## Revendications

1. Ensemble de filet de sécurité (9) pour véhicules automobiles, en particulier pour véhicules du type break, pour empêcher en cas de collision des objets contenus dans un compartiment à bagages ou à marchandises d'être projetés dans le compartiment à passagers, comprenant
- un boîtier (11) présentant une fente de sortie (18) s'étendant parallèlement à la longueur du boîtier (11),
- un arbre enrouleur (13) monté mobile en rotation dans le boîtier (11),
- un filet de sécurité (12) qui présente deux bords espacés l'un de l'autre dont l'un est fixé à l'arbre enrouleur (13) et dont l'autre est relié à une barre de tirage (21) passant dans la fente de sortie (18), et qui peut être amené par l'utilisateur dans au moins une position d'extraction dans laquelle il est extrait d'une longueur d'extraction prédéterminée hors du boîtier,
- un dispositif d'entraînement (14) associé à l'arbre enrouleur (13) pour appliquer à l'arbre enrouleur (13) une pré-tension dans le sens d'enroulement du filet de sécurité (12) et produire ainsi une force de rappel pour le filet de sécurité (12),
- des logements de réception (24) pour la barre de tirage (21) disposés sur le véhicule, et
- au moins un dispositif de maintien (25) qui est conçu pour entrer en action dans la position d'extraction du filet de sécurité (12) et pour supporter dans la position d'extraction une partie au moins de la force de rappel du dispositif d'entraînement (14).

2. Ensemble de filet de sécurité suivant la revendication 1, **caractérisé par le fait que** la position d'extraction correspond à une longueur d'extraction partielle dans laquelle le filet de sécurité (12) n'est extrait que sur une partie de sa longueur d'extraction totale possible.

3. Ensemble de filet de sécurité suivant la revendication 1, **caractérisé par le fait que** la position d'extraction correspond à une longueur d'extraction partielle dans laquelle le filet de sécurité (12) est extrait sensiblement sur sa longueur d'extraction totale possible.

4. Ensemble de filet de sécurité suivant la revendication 1, **caractérisé par le fait que** le dispositif de maintien (25) est conformé de manière à supporter la totalité de la force de rappel.

5. Ensemble de filet de sécurité suivant la revendication 1, **caractérisé par le fait que** le dispositif de maintien (25) présente deux états, à savoir un premier dans lequel il supporte la force de rappel et un deuxième dans lequel il ne supporte pas la force de rappel.

6. Ensemble de filet de sécurité suivant la revendication 5, **caractérisé par le fait qu'**au dispositif de maintien est associé un dispositif de déclenchement (71, 81, 114, 121) qui est conçu pour faire passer le dispositif de maintien (25) du premier état au deuxième état.

7. Ensemble de filet de sécurité suivant la revendication 6, **caractérisé par le fait que** le dispositif de déclenchement (71) est constitué par un élément de temporisation (71).

8. Ensemble de filet de sécurité suivant la revendication 6, **caractérisé par le fait que** le dispositif de déclenchement (114) est conçu pour l'actionnement manuel.

9. Ensemble de filet de sécurité suivant la revendication 1, **caractérisé par le fait que** le dispositif de maintien (25) est conçu pour au moins signaler à l'utilisateur que le filet de sécurité (12) est extrait suffisamment loin pour permettre l'accrochage de la barre de tirage (21) dans les logements de réception (24).

10. Ensemble de filet de sécurité suivant la revendication 1, **caractérisé par le fait que** le dispositif de maintien (25) est conçu pour empêcher que le filet de sécurité (12) puisse être extrait au-delà d'une longueur d'extraction prédéterminée.

11. Ensemble de filet de sécurité suivant la revendication 1, **caractérisé par le fait que** le dispositif de maintien (25) agit sur la barre de tirage (21).

12. Ensemble de filet de sécurité suivant la revendication 1, **caractérisé par le fait que** le dispositif de maintien (25) agit sur l'arbre enrouleur (13).

13. Ensemble de filet de sécurité suivant la revendication 1, **caractérisé par le fait que** le dispositif de maintien (25) agit sur le filet de sécurité (13).

14. Ensemble de filet de sécurité suivant la revendication 1, **caractérisé par le fait que** le dispositif de maintien (25) présente des moyens d'arrêt (45, 46 ; 86, 113) à franchissement possible, coopérant par voie dynamique, qui sont conçus de manière à ne pas empêcher une extraction du filet de sécurité (12) au-delà de la longueur d'extraction à laquelle le filet de sécurité (12) est extrait suffisamment loin pour l'accrochage de la barre de tirage (21) dans les logements de réception (24).

15. Ensemble de filet de sécurité suivant la revendication 1, **caractérisé par le fait que** le dispositif de maintien (25) présente des moyens d'interception (26, 27 ; 86, 113) coopérant par complémentarité de forme conçus de manière à empêcher une extraction du filet de sécurité (12) au-delà de la longueur d'extraction pour laquelle le filet de sécurité (12) est suffisamment extrait en vue de l'accrochage de la barre de tirage (21) dans les logements de réception (24).

16. Ensemble de filet de sécurité suivant la revendication 1, **caractérisé par le fait que** le dispositif de maintien (25) comprend au moins un moyen de maintien (42, 86) mobile relié directement ou indirectement au filet de sécurité (12) et des moyens de maintien (41, 56, 72) stationnaires disposés sur le boîtier (11).

17. Ensemble de filet de sécurité suivant la revendication 16, **caractérisé par le fait que** le moyen de maintien (42) prévu sur le filet de sécurité (12) est constitué par une barre (43) qui est fixée parallèlement et à distance de la barre de tirage (21) au filet de sécurité (12) et dont au moins une des extrémités (42) dépasse latéralement du filet de sécurité (12).

18. Ensemble de filet de sécurité suivant la revendication 16, **caractérisé par le fait que** le moyen de maintien (56) stationnaire comprend une rainure (59) ouverte à ses deux extrémités.

19. Ensemble de filet de sécurité suivant la revendication 18, **caractérisé par le fait que** la rainure (59) est ouverte en direction du filet de sécurité (12).

20. Ensemble de filet de sécurité suivant la revendication 18, **caractérisé par le fait que** la rainure (59) présente des parois de rainure (61, 62) déplaçables l'une vers l'autre et précontraintes élastiquement l'une vers l'autre.

21. Ensemble de filet de sécurité suivant la revendication 18, **caractérisé par le fait que** sur la rainure (59) est prévue au moins une saillie (64) qui fait saillie dans la rainure (59) et qui est conçue pour coopérer, dans la position d'arrêt, avec l'organe d'arrêt (42, 57) se trouvant sur le filet de sécurité (12).

22. Ensemble de filet de sécurité suivant la revendication 18, **caractérisé par le fait que** dans la rainure (59) est prévu au moins un évidement d'arrêt qui est conçu pour coopérer, dans la position d'arrêt, avec une saillie de l'organe d'arrêt se trouvant sur le filet de sécurité (12).

23. Ensemble de filet de sécurité suivant la revendication 16, **caractérisé par le fait que** le moyen de maintien (41, 56) stationnaire présente un bras flexible (45, 58) qui est fixé au boîtier (11).

24. Ensemble de filet de sécurité suivant la revendication 16, **caractérisé par le fait que** le dispositif de maintien (25) est conçu de manière que la force d'arrêt des moyens de maintien (42, 59) coopérant l'un avec l'autre soit dans un sens de mouvement du filet de sécurité (12) différente de celle dans l'autre sens de mouvement du filet de sécurité (12).

25. Ensemble de filet de sécurité suivant la revendication 16, **caractérisé par le fait que** le moyen de maintien (41) stationnaire présente la forme d'un crochet (59) ouvert en direction du boîtier (11) et comportant une saillie (48) se trouvant en avant de l'ouverture du crochet.

26. Ensemble de filet de sécurité suivant la revendication 16, **caractérisé par le fait que** le moyen de maintien stationnaire comprend un organe de verrouillage (72) monté pivotant dans le boîtier (11) à côté de l'arbre enrouleur (13) et portant un entraîneur (78) qui coopère avec une traverse (43) fixée au filet de sécurité (12), et que l'organe de verrouillage (72) présente deux positions de fonctionnement de manière à s'opposer, en coopération avec la traverse (43), à un enroulement du filet de sécurité (12) dans l'une des positions et à laisser passer la traverse (43) reliée au filet de sécurité (12) dans l'autre position.

27. Ensemble de filet de sécurité suivant les revendications 26 et 7, **caractérisé par le fait que** l'organe de temporisation (71) est constitué par un frein à liquide visqueux couplé en passant par une roue libre (76, 77) avec l'élément de verrouillage (72) pivotant de telle manière que le frein à liquide visqueux (71) soit hors d'action lors de l'extraction du filet de sécurité (12).

28. Ensemble de filet de sécurité suivant la revendication 1, **caractérisé par le fait que** le dispositif de maintien (21) présente au moins un élément d'espacement (26) qui est d'une part fixé au boîtier (11) et relié d'autre part à la barre de tirage (21).

29. Ensemble de filet de sécurité suivant la revendication 28, **caractérisé par le fait que** l'élément d'espacement (26) est articulé sur le boîtier (11) et est mobile autour d'axes de pivotement (28) dont l'un est parallèle à l'axe de l'arbre enrouleur (13) et l'autre perpendiculaire à l'axe de l'arbre enrouleur (13).

30. Ensemble de filet de sécurité suivant la revendication 28, **caractérisé par le fait que** la barre de tirage (21) comporte une glissière (29) dans laquelle est guidée l'extrémité de l'élément d'espacement (26) éloignée du boîtier (11).

31. Ensemble de filet de sécurité suivant la revendication 28, **caractérisé par le fait que** la barre de tirage (21) est munie d'un dispositif d'arrêt (32) à déclenchement arbitraire qui présente deux états dans l'un desquels l'élément d'espacement (26) peut librement franchir le dispositif d'espacement (32) dans les deux sens de mouvement dans la barre de tirage (21) et dans l'autre desquels l'élément d'espacement (26) peut franchir le dispositif d'arrêt (32) uniquement dans un sens de mouvement, de telle manière que la barre de tirage (21) soit maintenue à distance du boîtier (11) par l'entrée en butée de l'élément d'écartement (26) contre le dispositif d'encliquetage (32).

32. Ensemble de filet de sécurité suivant la revendication 28, **caractérisé par le fait qu'**il comprend deux éléments d'espacement (26) identiques, pivotant en sens contraire.

33. Ensemble de filet de sécurité suivant la revendication 1, **caractérisé par le fait qu'**il comprend, côté carrosserie, des logements de réception (24) pour les extrémités de la barre de tirage (21) et que chaque logement de réception (24) comporte un entonnoir d'entrée qui est conformé de manière que lors de l'engagement des extrémités de ladite barre de tirage (21) lors du pivotement vers le haut du filet de sécurité (12), la barre de tirage (21) ne soit pas déplacée tout au moins en direction du boîtier (11).

34. Ensemble de filet de sécurité suivant la revendication 1, **caractérisé par le fait que** le dispositif de maintien (25) comprend un dispositif compteur pour compter le nombre de tours de l'arbre enrouleur (13).

35. Ensemble de filet de sécurité suivant la revendication 16, **caractérisé par le fait que** le moyen de maintien (85, 95) stationnaire est constitué par une rainure (95) en spirale qui est disposée coaxialement à l'axe de l'arbre enrouleur (13) et dans laquelle est mobile un élément suiveur (86) couplé avec l'arbre enrouleur (13).

36. Ensemble de filet de sécurité suivant la revendication 35, **caractérisé par le fait que** la rainure (95) présente un creux d'encliquetage (113) coopérant avec l'élément suiveur (86).

37. Ensemble de filet de sécurité suivant la revendication 36, **caractérisé par le fait que** le creux d'encliquetage (113) est prévu dans une paroi latérale (92) de la rainure (95).

38. Ensemble de filet de sécurité suivant la revendication 35, **caractérisé par le fait que** l'élément suiveur (86) est disposé sur un coulisseau (97) qui est déplaçable en translation radialement par rapport à l'arbre enrouleur (13).

39. Ensemble de filet de sécurité suivant la revendication 35, **caractérisé par le fait que** la rainure (95) débouche, à son extrémité radialement intérieure, dans une trajectoire circulaire (96) au moins sensiblement cylindrique.

40. Ensemble de filet de sécurité suivant la revendication 35, **caractérisé par le fait que** la rainure (95) débouche, à son extrémité radialement extérieure, dans une trajectoire circulaire (87).

41. Ensemble de filet de sécurité suivant la revendication 35, **caractérisé par le fait que** la rainure (95) est munie, à son extrémité (93) radialement extérieure, d'un élément d'aiguillage (112) qui, dans un sens, libère le passage de l'élément suiveur (86) dans la trajectoire circulaire et qui, dans le sens du mouvement opposé, engage l'élément suiveur (86) dans la rainure (95) en spirale.

42. Ensemble de filet de sécurité suivant la revendication 35, **caractérisé par le fait que** sur le boîtier (11) est disposé un organe de déclenchement (114) conçu pour coopérer avec l'élément suiveur (86).

43. Ensemble de filet de sécurité suivant la revendication 6, **caractérisé par le fait que** le dispositif de déclenchement (121) est constitué par un dispositif à commande par accélération, répondant à un démarrage et/ou un freinage du véhicule.

44. Ensemble de filet de sécurité suivant la revendication 1, **caractérisé par le fait que** le dispositif de maintien (25) comprend une roue à rochet (122) solidaire en rotation de l'arbre enrouleur (13), en tant qu'organe de maintien stationnaire, ainsi qu'un cliquet de verrouillage (123) en tant qu'organe de maintien mobile.

45. Ensemble de filet de sécurité suivant les revendications 43 et 44, **caractérisé par le fait que** le dispositif de déclenchement (121) coopère avec le cliquet de verrouillage (123).
